(19) Europäisches Patentamt / European Patent Office / Office européen des brevets

(11) EP 4 091 184 B1

(12) **EUROPÄISCHE PATENTSCHRIFT**

(45) Veröffentlichungstag und Bekanntmachung des Hinweises auf die Patenterteilung:
**06.03.2024 Patentblatt 2024/10**

(21) Anmeldenummer: **21840553.8**

(22) Anmeldetag: **17.12.2021**

(51) Internationale Patentklassifikation (IPC):
***H01H 9/54*** (2006.01) ***H02H 3/08*** (2006.01)
*H01H 9/16* (2006.01)

(52) Gemeinsame Patentklassifikation (CPC):
**H01H 9/547; H01H 9/548; H02H 3/08;** H01H 9/16

(86) Internationale Anmeldenummer:
**PCT/EP2021/086360**

(87) Internationale Veröffentlichungsnummer:
**WO 2022/136136 (30.06.2022 Gazette 2022/26)**

(54) **SCHUTZSCHALTGERÄT UND VERFAHREN**

CIRCUIT BREAKER DEVICE AND METHOD

DISPOSITIF ET PROCÉDÉ DE DISJONCTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2020 DE 102020216409**

(43) Veröffentlichungstag der Anmeldung:
**23.11.2022 Patentblatt 2022/47**

(73) Patentinhaber: **Siemens Aktiengesellschaft**
**80333 München (DE)**

(72) Erfinder: **TANNHÄUSER, Marvin**
**91353 Hausen (DE)**

(74) Vertreter: **Siemens Patent Attorneys**
**Postfach 22 16 34**
**80506 München (DE)**

(56) Entgegenhaltungen:
**DE-A1-102018 213 354**
**DE-U1-202009 004 198**
**DE-U1-202009 014 759**
**US-A1- 2020 365 346**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 091 184 B1

## Beschreibung

Die Erfindung betrifft das technische Gebiet eines Schutzschaltgerät für einen Niederspannungsstromkreis mit einer elektronischen Unterbrechungseinheit und ein Verfahren für ein Schutzschaltgerät für einen Niederspannungsstromkreis mit einer elektronischen Unterbrechungseinheit.

Mit Niederspannung sind Spannungen von bis zu 1000 Volt Wechselspannung oder bis zu 1500 Volt Gleichspannung gemeint. Mit Niederspannung sind insbesondere Spannungen gemeint, die größer als die Kleinspannung, mit Werten von 50 Volt Wechselspannung bzw. 120 Volt Gleichspannung, sind.

Mit Niederspannungsstromkreis bzw. -netz oder -anlage sind Stromkreise mit Nennströmen bzw. Bemessungsströmen von bis zu 125 Ampere, spezifischer bis zu 63 Ampere gemeint. Mit Niederspannungsstromkreis sind insbesondere Stromkreise mit Nennströmen bzw. Bemessungsströmen von bis zu 50 Ampere, 40 Ampere, 32 Ampere, 25 Ampere, 16 Ampere oder 10 Ampere gemeint. Mit den genannten Stromwerten sind insbesondere Nenn-, Bemessungs- oder/und Abschaltströme gemeint, d.h. der Strom der im Normalfall maximal über den Stromkreis geführt wird bzw. bei denen der elektrische Stromkreis üblicherweise unterbrochen wird, beispielsweise durch eine Schutzeinrichtung, wie ein Schutzschaltgerät, Leitungsschutzschalter oder Leistungsschalter.

Leitungsschutzschalter sind seit langem bekannte Überstromschutzeinrichtungen, die in der Elektroinstallationstechnik in Niederspannungsstromkreisen eingesetzt werden. Diese schützen Leitungen vor Beschädigung durch Erwärmung infolge zu hohen Stromes und/oder Kurzschluss. Ein Leitungsschutzschalter kann den Stromkreis bei Überlast und/oder Kurzschluss selbsttätig abschalten. Ein Leitungsschutzschalter ist ein nicht selbsttätig zurückstellendes Sicherungselement. Leistungsschalter sind, im Gegensatz zu Leitungsschutzschaltern, für Ströme größer als 125 A vorgesehen, teilweise auch schon ab 63 Ampere. Leitungsschutzschalter sind deshalb einfacher und filigraner aufgebaut. Leitungsschutzschalter weisen üblicherweise eine Befestigungsmöglichkeit zur Befestigung auf einer so genannten Hutschiene (Tragschiene, DIN-Schiene, TH35) auf.

Leitungsschutzschalter sind elektromechanisch aufgebaut. In einem Gehäuse weisen sie einen mechanischen Schaltkontakt bzw. Arbeitsstromauslöser zur Unterbrechung (Auslösung) des elektrischen Stromes auf. Üblicherweise wird ein Bimetall-Schutzelement bzw. Bimetall-Element zur Auslösung (Unterbrechung) bei länger anhaltenden Überstrom (Überstromschutz) respektive bei thermischer Überlast (Überlastschutz) eingesetzt. Ein elektromagnetischer Auslöser mit einer Spule wird zur kurzzeitigen Auslösung bei Überschreiten eines Überstromgrenzwerts bzw. im Falle eines Kurzschlusses (Kurzschlussschutz) eingesetzt. Eine oder mehrere Lichtbogenlöschkammer(n) bzw. Einrichtungen zur Lichtbogenlöschung sind vorgesehen. Ferner Anschlusselemente für Leiter des zu schützenden elektrischen Stromkreises.

Schutzschaltgeräte mit einer elektronischen Unterbrechungseinheit sind relativ neuartige Entwicklungen. Diese weisen eine halbleiterbasierte elektronische Unterbrechungseinheit auf. D.h. der elektrische Stromfluss des Niederspannungsstromkreises wird über Halbleiterbauelemente respektive Halbleiterschalter geführt, die den elektrischen Stromfluss unterbrechen bzw. leitfähig geschaltet werden können. Schutzschaltgeräte mit einer elektronischen Unterbrechungseinheit weisen ferner häufig ein mechanisches Trennkontaktsystem auf, insbesondere mit Trennereigenschaften gemäß einschlägigem Normen für Niederspannungsstromkreise, wobei die Kontakte des mechanischen Trennkontaktsystems in Serie zur elektronischen Unterbrechungseinheit geschaltet sind, d.h. der Strom des zu schützenden Niederspannungsstromkreises wird sowohl über das mechanische Trennkontaktsystem als auch über die elektronische Unterbrechungseinheit geführt.

Ein derartiges Trennkontaktsystem weist üblicherweise ein Lichtbogenlöschsystem auf, mit dem der beim Schalten entstehende Lichtbogen (Schaltlichtbogen) gelöscht bzw. vermindert werden kann.

Die vorliegende Erfindung bezieht sich auf Niederspannungswechselstromkreise, mit einer Wechselspannung, üblicherweise mit einer zeitabhängigen sinusförmigen Wechselspannung mit der Frequenz f. Die zeitliche Abhängigkeit des momentanen Spannungswertes u(t) der Wechselspannung ist durch die Gleichung:

$$u(t) = U * \sin (2\pi * f * t)$$

beschrieben. Wobei:

u(t) = momentaner Spannungswert zu der Zeit t
U = Amplitude (Maximalwert) der Spannung

Eine harmonische Wechselspannung lässt sich durch die Rotation eines Zeigers darstellen, dessen Länge der Amplitude (U) der Spannung entspricht. Die Momentanauslenkung ist dabei die Projektion des Zeigers auf ein Koordinatensystem. Eine Schwingungsperiode entspricht einer vollen Umdrehung des Zeigers und dessen Vollwinkel beträgt 2n (2Pi) bzw. 360°. Die Kreisfrequenz ist die Änderungsrate des Phasenwinkels dieses rotierenden Zeigers. Die Kreisfrequenz einer harmonischen Schwingung beträgt immer das 2π-fache ihrer Frequenz, d.h.:

$$\omega = 2\pi * f = 2\pi / T = \text{Kreisfrequenz der Wechselspannung}$$

(T = Periodendauer der Schwingung)

Häufig wird die Angabe der Kreisfrequenz (ω) gegenüber der Frequenz (f) bevorzugt, da sich viele Formeln der Schwingungslehre aufgrund des Auftretens trigonometrischer Funktionen, deren Periode per Definition 2n ist, mit Hilfe der Kreisfrequenz kompakter darstellen lassen:

$$u(t) = U * \sin(\omega t)$$

Im Falle zeitlich nicht konstanter Kreisfrequenzen wird auch der Begriff momentane Kreisfrequenz verwendet.

Bei einer sinusförmigen, insbesondere zeitlich konstanten, Wechselspannung entspricht der zeitabhängige Wert aus der Winkelgeschwindigkeit ω und der Zeit t dem zeitabhängigen Winkel φ(t), der auch als Phasenwinkel φ(t) bezeichnet wird. D.h. der Phasenwinkel φ(t) durchläuft periodisch den Bereich 0...2π bzw. 0°...360°. D.h. der Phasenwinkel nimmt periodisch einen Wert zwischen 0 und 2π bzw. 0° und 360° an (φ = n* (0...2π) bzw. φ = n* (0°...360°), wegen Periodizität; verkürzt: φ = 0...2π bzw. φ = 0°...360°).

Mit momentanem Spannungswert u(t) ist folglich der momentane Wert der Spannung zum Zeitpunkt t, d.h. bei einer sinusförmigen (periodischen) Wechselspannung der Wert der Spannung zum Phasenwinkel φ gemeint (φ = 0...2π bzw. φ = 0°...360°, der jeweiligen Periode).

Die amerikanische Patentanmeldung US 2020/0365346 A1 offenbart einen intelligenten Leistungsschalter gemäß der Präambel des Anspruchs 1, mit bidirektionalen Festkörperschaltern. Ein Leistungsschalter umfasst einen bidirektionalen Festkörperschalter, eine Schaltersteuerschaltung, Strom- und Spannungssensoren und einen Prozessor. Der bidirektionale Festkörperschalter ist zwischen einen Leitungseingangsanschluss und einen Lastausgangsanschluss des Leistungsschalters geschaltet und dazu konfiguriert, in einen eingeschalteten Zustand und einen ausgeschalteten Zustand versetzt zu werden. Die Schaltersteuerschaltung steuert den Betrieb des bidirektionalen Schalters. Der Stromsensor ist dazu konfiguriert, eine Stromstärke zu erfassen, die in einem elektrischen Pfad zwischen den Leitungseingangs- und Lastausgangsanschlüssen fließt, und ein Stromerfassungssignal zu erzeugen. Der Spannungssensor ist dazu konfiguriert, eine Spannungsgröße auf dem elektrischen Pfad zu erfassen und ein Spannungserfassungssignal zu erzeugen. Der Prozessor ist so konfiguriert, dass er die Strom- und Spannungserfassungssignale verarbeitet, um Betriebszustandsinformationen des Leistungsschalters, ein Fehlerereignis und Stromverbrauchsinformationen einer mit dem Lastausgangsanschluss verbundenen Last zu bestimmen.

Aufgabe der vorliegenden Erfindung ist es, ein Schutzschaltgeräte eingangs genannter Art zu verbessern, insbesondere eine (alternative) Erkennung von Schalthandlungen eines mechanischen Trennkontaktsystem zu ermöglichen. Spezieller eine Verminderung des durch den Schaltlichtbogen verursachten Kontaktabbrandes bzw. eine zeitliche Verminderung von Schaltlichtbögen zu ermöglichen.

Diese Aufgabe wird durch ein Schutzschaltgeräte mit den Merkmalen des Patentanspruchs 1, sowie durch ein Verfahren gemäß Patentanspruch 14 gelöst.

Erfindungsgemäß ist ein Schutzschaltgerät zum Schutz eines elektrischen Niederspannungsstromkreises, insbesondere Niederspannungswechselstromkreises, vorgesehen, aufweisend:

- ein Gehäuse mit netzseitigen und lastseitigen Anschlüssen für (mindestens zwei) Leiter des Niederspannungswechselstromkreises,
- einem mit den (zwei) netzseitigen Anschlüssen verbundenen mechanischen Trennkontaktsystem zur galvanischen Unterbrechung des Niederspannungsstromkreises, das andererseits mit einer elektronischen Unterbrechungseinheit, die durch halbleiterbasierte Schaltelemente einen hochohmigen Zustand der Schaltelemente zur Unterbrechung und einen niederohmigen Zustand der Schaltelemente zum Stromfluss im Niederspannungsstromkreis aufweist, verbunden ist,

wobei die elektronische Unterbrechungseinheit andererseits mit den (zwei) lastseitigen Anschlüssen verbunden ist,

- einem Spannungssensor, der zwischen mechanischem Trennkontaktsystem und elektronischer Unterbrechungseinheit angeordnet ist, zur Ermittlung der dortigen Höhe der Spannung des Niederspannungsstromkreises,
- dass das mechanische Trennkontaktsystem manuell betätigbar ist, so dass Kontakte des mechanischen Trennkontaktsystem manuell für einen Stromfluss geschlossen und für eine Unterbrechung im Niederspannungsstromkreis geöffnet werden können,

- einer Steuerungseinheit, die mit dem Spannungssensor und der elektronischen Unterbrechungseinheit verbunden ist. Erfindungsgemäß ist das Schutzschaltgerät derart ausgestaltet, dass die Höhe der Spannung ermittelt wird und bei einem Spannungseinbruch
- von 10 bis 50 Volt bei einem einpolig (nur ein Leiter, der z.B. beiden Leiter des Niederspannungsstromkreises, wird unterbrochen) unterbrechenden oder
- von 20 bis 100 Volt bei einem zweipolig (beide Leiter, der z.B. beiden Leiter des Niederspannungsstromkreises, werden unterbrochen) unterbrechendem mechanischen Trennkontaktsystem eine Öffnung des mechanischen Trennkontaktsystem erkannt wird.

Ferner kann bei einem Spannungseinbruch auf kleiner 10 Volt ebenfalls eine Öffnung des mechanischen Trennkontaktsystem erkannt werden.

Erfindungsgemäß ist damit vorteilhaft eine vom mechanischen Trennkontaktsystem, d.h. seiner mechanischen Komponenten, unabhängige Erkennung einer Öffnung (Betätigung) desselben ermöglicht, wobei nur eine Spannungsmessung im Niederspannungsstromkreis verwendet wird. Vorteilhaft sollte eine sehr schnelle Spannungsmessung verwendet werden.

Vorsteilhafte Ausgestaltungen der Erfindung sind in den Unteransprüchen angegeben.

In einer vorteilhaften Ausgestaltung der Erfindung wird die (momentane) Höhe der Spannung mit einem (momentanen) unteren Schwellwert verglichen. Der (momentane) untere Schwellwert wird aus dem Betrag eines (momentanen) Erwartungswertes der Spannung multipliziert mit einem Skalierungsfaktor, der insbesondere ein Wert im Bereich 0,85 bis 1 sein kann, und subtrahiert mit einem festen Spannungswert, insbesondere einem Wert im Bereich 10 bis 50 Volt bei einem einpolig unterbrechenden oder 20 bis 100 Volt bei einem zweipolig unterbrechendem mechanischen Trennkontaktsystem, gebildet. Bei Unterschreitung des momentanen unteren Schwellwertes wird eine Öffnung des mechanischen Trennkontaktsystem erkannt.

Dies hat den besonderen Vorteil, dass eine einfache Schwellwertvergleichslösung für die Erfindung gegeben ist. Durch den Skalierungsfaktor kann eine robuste Lösung, bei einem Skalierungsfaktor von z.B. 0,85, die Fehlerkennungen vermeidet, bzw. eine empfindliche Erkennung, bei einem Skalierungsfaktor von z.B. 1, erreicht werden (d.h. eine Skalierung entfällt).

In einer vorteilhaften Ausgestaltung der Erfindung wird die (momentane) Höhe der Spannung mit einem (momentanen) oberen Schwellwert verglichen. Der (momentane) obere Schwellwert wird aus dem Betrag eines (momentanen) Erwartungswertes der Spannung dividiert mit einem Skalierungsfaktor, insbesondere einem Wert aus dem Bereich 0,85 bis 1, und addiert mit einem festen Spannungswert, insbesondere einem Wert aus dem Bereich 10 bis 100 Volt, insbesondere unabhängig von der Polzahl des mechanischen Trennkontaktsystem, gebildet.

Bei Überschreitung des momentanen oberen Schwellwertes wird eine Öffnung des mechanischen Trennkontaktsystem (MK) erkannt.

Dies hat den besonderen Vorteil, dass eine weitere einfache Schwellwertvergleichslösung für die Erfindung gegeben ist. Schaltbedingte Spannungserhöhungen werden auch bei Öffnungen bzw. als Öffnungen erkannt, die beispielsweise durch Induktivitäten auf der Lastseite entstehen können.

Ferner ist ein weiterer Schutz bzw. eine weitere Schutzfunktion gegen Überspannungen gegeben.

Weiterhin wird eine Bereichsüberprüfung bzw. ist eine Korridorüberprüfung (unterer und oberer Schwellwert) gegeben, wobei Öffnungen sicher erkannt werden.

Durch den Skalierungsfaktor kann eine robuste Lösung, bei einem Skalierungsfaktor von z.B. 0,85, die Fehlerkennungen vermeidet, bzw. eine empfindliche Erkennung, bei einem Skalierungsfaktor von z.B. 1, erreicht werden (d.h. eine Skalierung entfällt).

In einer vorteilhaften Ausgestaltung der Erfindung wechseln bei einer Erkennung der Öffnung (Betätigung) des mechanischen Trennkontaktsystems die halbleiterbasierten Schaltelemente der elektronischen Unterbrechungseinheit, insbesondere innerhalb einer ersten Zeitspanne bzw. kleiner als eine erste Zeitspanne, die insbesondere kleiner als 100 $\mu$s, spezieller kleiner als 50 $\mu$s oder 10 $\mu$s ist, in einen hochohmigen Zustand, zur Vermeidung vom Schaltlichtbogen verursachten Kontaktabbrand bzw. zeitlichen Reduzierung der Schaltlichtbogendauer des mechanischen Trennkontaktsystems.

Dies hat den besonderen Vorteil, dass die mechanischen Kontakte fast leistungslos geschaltet bzw. geöffnet werden können und der Kontaktabbrand, der das Gerät altert und schädigt, verringert wird, da nach Erkennung des durch den Schaltlichtbogen verursachten Spannungseinbruchs eine (quasi) sofortige Hochohmigkeit durch die elektronische Unterbrechungseinheit erfolgt, wodurch der weitere Stromfluss sofort reduziert und damit quasi sofort reduziert wird. Damit kann ferner vorteilhaft ein Lichtbogenlöschsystem entfallen. Weiterhin kann vorteilhaft das Kontaktsystem einfacher aufgebaut sein, da nicht soviel Material für den Kontaktabbrand vorgesehen sein muss bzw. keine speziellen Legierungen für das Kontaktmaterial eingesetzt werden müssen.

In einer vorteilhaften Ausgestaltung der Erfindung weist das Schutzschaltgerät eine Kommunikationseinheit auf. Bei einer Erkennung der Öffnung des mechanischen Trennkontaktsystems wird eine Information durch die Kommunikationseinheit abgegeben.

Dies hat den besonderen Vorteil, dass ein Ausschalten des Schutzschaltgerätes erkannt und kommuniziert wird, beispielsweise zu übergeordneten Einheiten bzw. Managementsystemen.

In einer vorteilhaften Ausgestaltung der Erfindung weist das Schutzschaltgerät eine Anzeigeeinheit auf. Bei einer Erkennung der Öffnung des mechanischen Trennkontaktsystems wird eine Information durch die Anzeigeeinheit angezeigt.

Dies hat den besonderen Vorteil, dass das Öffnen des mechanischen Trennkontaktsystems angezeigt wird.

In einer vorteilhaften Ausgestaltung der Erfindung weist das Schutzschaltgerät einen Speicher auf. Bei einer Erkennung der Öffnung des mechanischen Trennkontaktsystems wird eine Information im Speicher gespeichert.

Dies hat den besonderen Vorteil, dass Informationen zum Öffnen des mechanischen Trennkontaktsystems im Nachgang abrufbar sind.

In einer vorteilhaften Ausgestaltung der Erfindung ist ein weiterer Spannungssensor zwischen netzseitigem Anschluss und mechanischen Trennkontaktsystem vorgesehen.

Dies hat den besonderen Vorteil, dass eine alternative Möglichkeit zur Erkennung einer Öffnung des mechanischen Trennkontaktsystems und für weitere Optionen gegeben ist.

In einer vorteilhaften Ausgestaltung der Erfindung führt der weitere Spannungssensor eine Spannungsermittlung nur dahingehend durch, ob eine Spannung an den netzseitigen Anschlüssen anliegt. Insbesondere, ob eine gültige Netzspannung (z.B. 230V +/- 10%) anliegt.

Dies hat den besonderen Vorteil, dass ein vereinfachter Spannungssensor verwendet werden kann. Damit kann weiter verifiziert bzw. unterschieden werden, ob die netzseitige Energiequelle ausgeschaltet wurde oder ein mechanischer Betätigungsvorgang / Öffnung vorliegt.

In einer vorteilhaften Ausgestaltung der Erfindung ermittelt der weitere Spannungssensor die dortige Höhe der Spannung. Der Spannungseinbruch wird durch eine Differenzbildung der Spannungen der beiden Spannungssensoren ermittelt.

Dies hat den besonderen Vorteil, dass eine alternative Möglichkeit zur Erkennung einer Öffnung des mechanischen Trennkontaktsystems gegeben ist.

In einer vorteilhaften Ausgestaltung der Erfindung ist der weitere Spannungssensor galvanisch getrennt von den anderen Einheiten des Schutzschaltgerätes. Insbesondere kann mindestens ein Optokoppler oder kapazitive Elemente vorgesehen sein.

Dies hat den besonderen Vorteil, dass eine Überbrückung der Trennfunktion bzw. Trennereigenschaften des mechanischen Trennkontaktsystems vermieden wird.

In einer vorteilhaften Ausgestaltung der Erfindung weist das Schutzschaltgerät eine Energieversorgung (wie ein Netzteil) mit einem Energiespeicher auf. Die Energieversorgung mit Energiespeicher ist derart ausgestaltet, dass nach einem Öffnungsvorgang der Kontakte des mechanischen Trennkontaktsystems ausreichend Energie für:

- einen Wechsel der halbleiterbasierten Schaltelemente in den hochohmigen Zustand oder (/und)
- einer Abgabe der Information durch die Kommunikationseinheit oder (/und)
- einer Anzeige der Information durch die Anzeigeeinheit oder (/und)

    -- einen Wechsel des Schutzschaltgerätes in einen definierten Zustand, inklusive dem Speichern von Informationen, insbesondere über den Zeitpunkt der Betätigung oder/und Höhe der Spannung oder/und Stromes oder/und Frequenz oder/und Temperatur,

vorgesehen ist.

Dies hat den besonderen Vorteil, dass die erfindungsgemäßen Funktionen auch nach einem Wegfall der Energieversorgung noch bereitgestellt werden können.

In einer vorteilhaften Ausgestaltung der Erfindung steht eine Energieversorgung durch den Energiespeicher für eine Zeit von 10 ms bis 1 s, insbesondere 20 ms bis 100 ms bzw. 500 ms, nach einem Öffnungsvorgang der Kontakte des mechanischen Trennkontaktsystems zur Verfügung.

Dies hat den besonderen Vorteil, dass das Schutzschaltgerät, insbesondere die Steuerungseinheit, nach dem Öffnungsvorgang, bei dem die reguläre Energieversorgung ebenso abgeschaltet wird, in einen definierten Zustand gehen kann, Informationen abspeichern kann und Informationen, insbesondere über die Öffnung der Kontakte oder/und das Abschalten des Schutzschaltgerätes, senden kann. Die Steuerungseinheit, insbesondere dessen Mikroprozessor, kann damit definiert herunterfahren bzw. den Ausschaltvorgang definiert abschließen.

Erfindungsgemäß wird ein korrespondierendes Verfahren für ein Schutzschaltgerät für einen Niederspannungsstromkreis mit elektronischen (halbleiterbasierten) Schaltelementen mit den gleichen und weiteren Vorteilen beansprucht.

Alle Ausgestaltungen, sowohl in abhängiger Form rückbezogen auf den Patentanspruch 1 bzw. 14, als auch rückbezogen lediglich auf einzelne Merkmale oder Merkmalskombinationen von Patentansprüchen, bewirken eine Verbesserung eines Schutzschaltgerätes zur schnellen und sicheren Erkennung eines Öffnungsvorganges des mechanischen Trennkontaktsystems / Verminderung von Kontaktabbrand / Schaltlichtbögen.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden.

Dabei zeigt die Zeichnung:

Figur 1 eine Darstellung eines Schutzschaltgerätes,

Figur 2 eine erste Ausgestaltung des Schutzschaltgerätes,

Figur 3 eine zweite Ausgestaltung des Schutzschaltgerätes,

Figur 4 eine dritte Ausgestaltung des Schutzschaltgerätes,

Figur 5 eine vierte Ausgestaltung des Schutzschaltgerätes,

Figur 6 einen ersten Spannungs- und Schwellwertverlauf über der Zeit,

Figur 7 einen zweiten Spannungs- und Schwellwertverlauf über der Zeit.

Figur 1 zeigt eine Darstellung eines Schutzschaltgerätes SG zum Schutz eines elektrischen Niederspannungsstromkreises mit einem Gehäuse GEH, aufweisend:

- Anschlüsse für Leiter (L, N) des Niederspannungsstromkreises, insbesondere erste Anschlüsse L1, N1 für eine netzseitigen, insbesondere energiequellenseitigen, Anschluss EQ des Schutzschaltgerätes SG und zweite Anschlüsse L2, N2 für einen lastseitigen, insbesondere energiesenkenseitigen - im Falle passiver Lasten, Anschluss ES (verbraucherseitigen Anschluss) des Schutzschaltgerätes SG, wobei speziell phasenleiterseitige Anschlüsse L1, L2 und neutralleiterseitige Anschlüsse N1, N2 vorgesehen sein können;

  der lastseitige Anschluss kann eine passive Last (Verbraucher) oder/und eine aktive Last ((weitere) Energiequelle) aufweisen, bzw. eine Last, die sowohl passiv als auch aktiv sein kann, z.B. in zeitlicher Abfolge;
  dass Schutzschaltgerät ist in diesem Beispiel zweipolig aufgebaut: der erste Pol für einen Phasenleiter L1, L2, der zweite Pol für einen Neutralleiter N1, N2 des Niederspannungs(wechsel)stromkreises;

- einem mit den netzseitigen Anschlüssen L1, N1 verbundenen mechanischen Trennkontaktsystem MK, zur galvanischen Unterbrechung des Niederspannungsstromkreises, das andererseits mit einer elektronischen Unterbrechungseinheit EU, die durch halbleiterbasierte Schaltelemente einen hochohmigen Zustand der Schaltelemente zur Unterbrechung und einen niederohmigen Zustand der Schaltelemente zum Stromfluss im Niederspannungsstromkreis aufweist, verbunden ist,

  wobei die elektronische Unterbrechungseinheit EU andererseits mit den lastseitigen Anschlüssen L2, N2 verbunden ist,
  dass mechanische Trennkontaktsystem MK und die elektronische Unterbrechungseinheit EU sind elektrisch in Serie geschaltet,

- das mechanische Trennkontaktsystem MK ist, insbesondere ausschließlich, manuell betätigbar, so dass Kontakte des mechanischen Trennkontaktsystem MK manuell für einen Stromfluss geschlossen und für eine Unterbrechung im Niederspannungsstromkreis geöffnet werden können,
  beispielsweise kann am Schutzschaltgerät eine Handhabe zum Öffnen und Schließen der Kontakte angebracht sein, ferner kann eine Mechanik zur Schaltunterstützung zwischen Handhabe und Kontakten vorgesehen sein,
- einem Spannungssensor SU, der zwischen mechanischem Trennkontaktsystem MK und elektronischer Unterbrechungseinheit EU angeordnet ist, zur Ermittlung der dortigen Höhe der Spannung des Niederspannungsstromkreises, insbesondere zur (periodischen) Ermittlung der Höhe der Spannung des Niederspannungsstromkreises, so dass taktweise / momentane Spannungswerte vorliegen,
- einer Steuerungseinheit SE, die mit dem Spannungssensor SU und der elektronischen Unterbrechungseinheit EU verbunden ist.

Das Schutzschaltgerät SG ist derart ausgestaltet,
dass die Höhe der Spannung ermittelt wird und bei einem Spannungseinbruch von 10 bis 50 Volt bei einem einpolig unterbrechenden oder von 20 bis 100 Volt bei einem zweipolig unterbrechendem mechanischen Trennkontaktsystem eine Öffnung bzw. Betätigung des mechanischen Trennkontaktsystem erkannt wird. Alternativ bzw. zusätzlich bei einem Spannungseinbruch auf kleiner 10 Volt.

Bei einer derartigen Erkennung der Öffnung bzw. Betätigung des mechanischen Trennkontaktsystems können beispielsweise die halbleiterbasierten Schaltelemente der elektronischen Unterbrechungseinheit in einen hochohmigen Zustand wechseln, zur Vermeidung von Schaltlichtbögen verursachten Kontaktabbrand der Kontakte des mechanischen Trennkontaktsystems.

Das Schutzschaltgerät SG kann eine Kommunikationseinheit aufweisen. Bei einer Erkennung der Öffnung bzw. Betätigung des mechanischen Trennkontaktsystems kann eine Information durch die Kommunikationseinheit abgegeben werden. Die Information kann die Betätigung des Trennkontaktes betreffen, aber auch weitere Informationen, z.B. im Moment des Betätigens anliegender Momentanwert des Stromes, der Spannung, den Zeitpunkt oder der Temperatur.

Das Schutzschaltgerät kann eine Anzeigeeinheit aufweisen. Bei einer Erkennung der Öffnung bzw. Betätigung des mechanischen Trennkontaktsystems wird eine Information durch die Anzeigeeinheit angezeigt.

Das Schutzschaltgerät kann einen Speicher aufweisen. Bei einer Erkennung der Öffnung bzw. Betätigung des mechanischen Trennkontaktsystems wird eine Information (z.B. über den Zeitpunkt der Erkennung, Höhe der Spannung oder/und Stromes, Frequenz, Temperatur, etc.) im Speicher gespeichert, die später ausgelesen werden kann.

Ein weiterer Spannungssensor kann zwischen netzseitigem Anschluss (L1, N1) und mechanischen Trennkontaktsystem MK vorgesehen sein. Dieser kann eine Spannungsermittlung nur dahingehend durchführt, ob eine Spannung an den netzseitigen Anschlüssen anliegt, insbesondere einer gewissen Höhe vorliegt. Der weitere Spannungssensor kann die dortige Höhe der Spannung ermitteln. Der Spannungseinbruch kann durch eine Differenzbildung der Spannungen der beiden Spannungssensoren ermittelt werden.

Der weitere Spannungssensor kann galvanisch getrennt von den anderen Einheiten des Schutzschaltgerätes SG sein, insbesondere durch mindestens einen Optokoppler oder kapazitive Elemente, um eine Überbrückung des vorhandenen mechanischen Trennkontaktes zu vermeiden.

Das Schutzschaltgerät weist eine Energieversorgung mit einem Energiespeicher auf, beispielsweise ein Netzteil NT mit kapazitivem Energiespeicher (Kondensator(en)). Das Netzteil NT ist einerseits mit den Leitern des Niederspannungsstromkreises verbunden, bevorzugt mit den Leitern zwischen mechanischen Trennkontaktsystem MK und elektronischer Unterbrechungseinheit EU. Das Netzteil NT dient andererseits zur Energieversorgung der Steuerungseinheit SE oder/und der elektronischen Unterbrechungseinheit EU sowie gegebenenfalls des Spannungssensors SU oder/und Stromsensors SI. Die Energieversorgung mit einem Energiespeicher ist derart ausgestaltet ist, dass nach einem Öffnungsvorgang der Kontakte des mechanischen Trennkontaktsystems MK ausreichend Energie für:

- einen Wechsel der halbleiterbasierten Schaltelemente in den hochohmigen Zustand oder (/ und)
- einer Abgabe von Informationen durch die Kommunikationseinheit oder (/ und)
- einer Anzeige der Information durch die Anzeigeeinheit
- einen Wechsel des Schutzschaltgerätes in einen definierten Zustand (vorbereiten des Herunterfahrens der Steuerungseinheit), inklusive dem Speichern von Informationen, z.B. über den Zeitpunkt der Betätigung, Höhe der Spannung oder/und Stromes, Frequenz, Temperatur etc.

vorgesehen ist.

Allgemein kann eine Dimensionierung dahingehend erfolgen, dass eine Energieversorgung durch den Energiespeicher für eine Zeit von 1 ms bis 1 s, insbesondere 20 ms bis 100 ms bzw. 500 ms, nach einem Öffnungsvorgang der Kontakte des mechanischen Trennkontaktsystems zur Verfügung steht.

Zusätzlich, für eine Ausgestaltung der Erfindung, kann ferner ein Stromsensor SI, zur (periodischen) Ermittlung der Höhe des Stromes des Niederspannungsstromkreises oder/und der Änderung des Stromes nach der Zeit vorgesehen sein, so dass (taktweise) Stromwerte oder/und Stromänderungswerte vorliegen, wie im Beispiel gemäß Figur 1 eingezeichnet.

Der Stromsensor SI ist dann mit der Steuerungseinheit SE verbunden. Die Ermittlung von Stromänderungswerten kann beispielsweise im Stromsensor SI selbst oder in der Steuerungseinheit SE erfolgen.

Die elektronische Unterbrechungseinheit EU ist gemäß Figur 1 als Block in beiden Leitern eingezeichnet. Damit ist in einer ersten Variante keine Unterbrechung beider Leiter gemeint. Mindestens ein Leiter, insbesondere der aktive Leiter respektive Phasenleiter, weist halbleiterbasierte Schaltelemente auf. Der Neutralleiter kann schaltelementefrei sein, d.h. ohne halbleiterbasierte Schaltelemente. D.h. der Neutralleiter ist direkt verbunden, d.h. wird nicht hochohmig.

D.h. es erfolgt nur eine einpolige Unterbrechung (des Phasenleiters). Sind weitere aktive Leiter / Phasenleiter vorgesehen, weisen in einer zweiten Variante der elektronischen Unterbrechungseinheit EU die Phasenleiter halbleiterbasierten Schaltelemente auf. Der Neutralleiter ist direkt verbunden, d.h. wird nicht hochohmig. Beispielsweise für einen Dreiphasen-Wechselstromkreis.

In einer dritten Variante der elektronischen Unterbrechungseinheit EU kann der Neutralleiter ebenfalls ein halbleiterbasiertes Schaltelement aufweisen, d.h. bei einer Unterbrechung der elektronischen Unterbrechungseinheit EU werden beide Leiter hochohmig.

Die elektronische Unterbrechungseinheit EU kann Halbleiterbauelemente wie Bipolartransistoren, Feldeffekttransistoren, Isolated Gate Bipolartransistoren (IGBT), Metall Oxid Schicht Feldeffekttransistoren (MOSFET) oder andere (selbstgeführte) Leistungshalbleiter aufweisen. Insbesondere IGBT's und MOSFET's eignen sich auf Grund geringer Durchflusswiderstände, hoher Sperrschichtwiderstände und eines guten Schaltverhaltens besonderes gut für das erfindungsgemäße Schutzschaltgerät.

Das mechanische Trennkontaktsystem MK kann in einer ersten Variante einpolig unterbrechen. D.h. es wird nur ein Leiter der beiden Leiter, insbesondere der aktive Leiter respektive Phasenleiter unterbrochen, d.h. weist einen mechanischen Kontakt auf. Der Neutralleiter ist dann kontaktfrei, d.h. der Neutralleiter ist direkt verbunden.

Sind weitere aktive Leiter / Phasenleiter vorgesehen, weisen in einer zweiten Variante die Phasenleiter mechanische Kontakte des mechanischen Trennkontaktsystems auf. Der Neutralleiter ist in dieser zweiten Variante direkt verbunden. Beispielsweise für einen Dreiphasen-Wechselstromkreis.

In einer dritten Variante des mechanischen Trennkontaktsystem MK weist der Neutralleiter ebenfalls mechanische Kontakte auf, wie in Figur 1 eingezeichnet. Z.B. für eine zweipolige oder allpolige Unterbrechung.

Im Falle eines Drei-Phasenwechselstromkreises erfolgt eine analoge Ermittlung des Spannungseinbruchs, wobei hier zwischen zwei aktiven Leitern (Phasenleitern) oder zwischen aktiven und Neutralleiter gemessen werden kann.

Die Erfindung bezieht sich auf eine Erkennung einer manuellen Betätigung, speziell Öffnung, der Kontakte des mechanischen Trennkontaktsystems. Die Erkennung erfolgt abhängig von der Anzahl der öffnenden Kontakte. Die Erkennung einer manuellen Betätigung soll erfindungsgemäß unabhängig von der Erfassung einer mechanischen Betätigung erfolgen, d.h. rein elektronisch.

Das Schutzschaltgerät SG weist ein mechanisches Trennkontaktsystem MK auf, insbesondere gemäß Norm mit normgerechten Trennereigenschaften, zur galvanischen Trennung des Stromkreises, insbesondere zum normgerechten Freischalten (im Gegensatz zum Abschalten) des Stromkreises.

Mit mechanischem Trennkontaktsystem MK ist insbesondere eine (normgerechte) Trennfunktion gemeint, realisiert durch das Trennkontaktsystem MK. Mit Trennfunktion sind die Punkte:

- Mindestluftstrecke nach Norm (Mindestabstand der Kontakte),
- Kontaktstellungsanzeige der Kontakte des mechanischen Trennkontaktsystem,
- Betätigung des mechanischen Trennkontaktsystem immer möglich (keine Blockierung des Trennkontaktsystems),

gemeint.

Hinsichtlich der Mindestluftstrecke zwischen den Kontakten des Trennkontaktsystem ist diese im Wesentlichen spannungsabhängig. Weitere Parameter sind der Verschmutzungsgrad, die Art des Feldes (homogen, inhomogen), und der Luftdruck bzw. die Höhe über Normalnull.

Für diese Mindestluftstrecken bzw. Kriechstrecken gibt es entsprechende Vorschriften bzw. Normen. Diese Vorschriften geben beispielsweise bei Luft für eine Stoßspannungsfestigkeit die Mindestluftstrecke für ein inhomogenes und ein homogenes (ideales) elektrisches Feld in Abhängigkeit vom Verschmutzungsgrad an. Die Stoßspannungsfestigkeit ist die Festigkeit beim Anlegen einer entsprechenden Stoßspannung. Nur bei Vorliegen dieser Mindestlänge (Mindeststrecke) weist das Trennkontaktsystem bzw. Schutzschaltgerät eine Trennfunktion (Trennereigenschaft) auf.

Im Sinne der Erfindung sind hierbei für die Trennerfunktion und deren Eigenschaften der Normenreihe DIN EN 60947 bzw. IEC 60947 einschlägig, auf die hier durch Referenz Bezug genommen wird.

Das Trennkontaktsystem ist vorteilhafterweise durch eine Mindestluftstrecke der geöffneten Trennkontakte in der AUS-Stellung (Geöffnet Stellung, geöffnete Kontakte) in Abhängigkeit von der Bemessungsstoßspannungsfestigkeit und dem Verschmutzungsgrad gekennzeichnet. Die Mindestluftstrecke beträgt insbesondere zwischen (im Minimum) 0,01 mm und 14 mm. Insbesondere beträgt vorteilhafterweise die Mindestluftstrecke zwischen 0,01 mm bei 0,33 kV und 14 mm bei 12 kV, insbesondere für Verschmutzungsgrad 1 sowie insbesondere für inhomogene Felder.

Vorteilhafterweise kann die Mindestluftstrecke die folgenden Werte aufweisen:

**E DIN EN 60947-1 (VDE 0660-100):2018-06**

**Tabelle 13 - Mindestluftstrecken**

<table>
<tr><th rowspan="4">Bemessungsstoßspannungsfestigkeit<br>$U_{imp}$<br>kV</th><th colspan="8">Mindestluftstrecken mm</th></tr>
<tr><th colspan="4">Fall A Inhomogenes Feld<br>(siehe 3.7.63)</th><th colspan="4">Fall B homogenes Feld, ideale Bedingungen<br>(siehe 3.7.62)</th></tr>
<tr><th colspan="4">Verschmutzungsgrad</th><th colspan="4">Verschmutzungsgrad</th></tr>
<tr><th>1</th><th>2</th><th>3</th><th>4</th><th>1</th><th>2</th><th>3</th><th>4</th></tr>
<tr><td>0,33</td><td>0,01</td><td rowspan="3">0,2</td><td rowspan="4">0,8</td><td rowspan="5">1,6</td><td>0,01</td><td rowspan="3">0,2</td><td rowspan="5">0,8</td><td rowspan="6">1,6</td></tr>
<tr><td>0,5</td><td>0,04</td><td>0,04</td></tr>
<tr><td>0,8</td><td>0,1</td><td>0,1</td></tr>
<tr><td>1,5</td><td>0,5</td><td>0,5</td><td>0,3</td><td>0,3</td></tr>
<tr><td>2,5</td><td>1,5</td><td>1,5</td><td>1,5</td><td>0,6</td><td>0,6</td></tr>
<tr><td>4,0</td><td>3</td><td>3</td><td>3</td><td>3</td><td>1,2</td><td>1,2</td><td>1,2</td></tr>
<tr><td>6,0</td><td>5,5</td><td>5,5</td><td>5,5</td><td>5,5</td><td>2</td><td>2</td><td>2</td><td>2</td></tr>
<tr><td>8,0</td><td>8</td><td>8</td><td>8</td><td>8</td><td>3</td><td>3</td><td>3</td><td>3</td></tr>
<tr><td>12</td><td>14</td><td>14</td><td>14</td><td>14</td><td>4,5</td><td>4,5</td><td>4,5</td><td>4,5</td></tr>
<tr><td colspan="9">ANMERKUNG Die angegebenen kleinsten Luftstrecken beruhen auf der 1,2/50-µs-Stoßspannung bei einem Luftdruck von 80 kPa, was dem Luftdruck bei 2 000 m über NN entspricht.</td></tr>
</table>

Die Verschmutzungsgrade und Feldarten entsprechen den in den Normen definierten. Dadurch lässt vorteilhafterweise ein entsprechend der Bemessungsstoßspannungsfestigkeit dimensioniertes normgerechtes Schutzschaltgerät erzielen.

Die elektronische Erkennung einer manuellen Betätigung, speziell Öffnung, der Kontakte des mechanischen Trennkontaktsystems, d.h. die Erkennung eines Spannungseinbruchs durch die Lichtbogenspannung der Schaltkontakte, abhängig von der Anzahl der Schaltkontakte, d.h. der Polzahl, kann beispielsweise wie folgt erfolgen.

In einer Variante kann das Schutzschaltgerät SG derart ausgestaltet sein,
dass aus den ermittelten Spannungswerten und einem Erwartungswert der Spannung eine Differenzspannung ermittelt wird, so dass taktweise Differenzspannungswerte vorliegen. Jeder Differenzspannungswert wird, insbesondere betragsmäßig, mit einem ersten Schwellwert verglichen. Bei Überschreitung von mindestens zwei aufeinanderfolgenden Differenzspannungswerten wird ein Öffnungsvorgang des mechanischen Trennkontaktsystems erkannt.

Um einen weiteren Stromfluss mit Schaltlichtbogen zu vermeiden, wird die elektronische Unterbrechungseinheit EU angesteuert, die dafür in einen hochohmigen Zustand wechselt.

Der Erwartungswert der Spannung kann beispielsweise durch eine so genannte Phase Locked Loop respektive Phasenregelschleife, kurz PLL, ermittelt werden. Eine PLL ist eine elektronische Schaltungsanordnung, die die Phasenlage und damit zusammenhängend die Frequenz eines veränderbaren Oszillators über einen geschlossenen Regelkreis so beeinflusst, dass die Phasenabweichung zwischen einem äußeren periodischen Referenzsignal und dem Oszillator oder einem daraus abgeleiteten Signal möglichst konstant ist.

Damit kann u.a. die Grundfrequenz und deren Amplitude der zugeführten Netzspannung, d.h. der ermittelten Spannungswerte, ermittelt werden, d.h. der (ungestörte bzw. gefilterte) Erwartungswert der (Netz-)Spannung.

Der von der PLL abgegebene Erwartungswert der Spannung kann dann mit dem ermittelten Spannungswert verglichen werden, insbesondere zeit- bzw. phasensynchron, so dass eine Differenz der Werte vorliegt. Häufig kann eine PLL selbst eine derartige Funktion durchführen, d.h. die Differenz abgeben, d.h. einen Differenzspannungswert.

Die Differenzspannung wird darin, insbesondere betragsmäßig, mit dem Schwellwert verglichen.

Alternativ kann auch der Erwartungswert der Spannung in einer Tabelle abgelegt sein, wobei dann phasensynchron die jeweiligen Spannungswerte verglichen werden bzw. eine phasensynchrone Differenz gebildet wird, so dass Differenzspannungswerte vorliegen.

Die Ermittlung der Differenzspannungswerte kann beispielsweise im Spannungssensor SU selbst oder in der Steuerungseinheit SE erfolgen. So dass taktweise Differenzspannungswertes vorliegen.

Figur 2 zeigt eine Darstellung einer Abschaltlogik ASL, wie sie beispielsweise in der Steuerungseinheit SE gemäß Figur 1 implementiert sein kann, beispielsweise funktionell oder schaltungstechnisch. Die Differenzspannungswerte werden (taktweise) einem ersten Komparator COMP1 zugeführt werden, zum Vergleich jedes Differenzspannungswertes mit dem ersten Schwellwert. Der Ausgang des ersten Komparators COMP1 ist ferner:

- zum Ersten direkt,
- zum Zweiten über einen ersten Zwischenspeicher Z1, der genau einen Komparator-Ausgangswert (taktweise) zwischenspeichert,
- in der Ausgestaltung gemäß Figur 2 zum Dritten über den ersten Zwischenspeicher Z1 mit einem zweiten Zwischenspeicher Z2, der genau einen Komparator-Ausgangswert (taktweise) zwischenspeichert,

mit einem ersten Und-Glied AND1 verbunden ist, so dass bei

Überschreitung im Beispiel dreier aufeinanderfolgender Differenzspannungswerte eine Unterbrechung des Niederspannungsstromkreises initiiert wird, beispielsweise durch das Unterbrechungssignal TRIP, das von der Steuerungseinheit SE zur elektronischen Unterbrechungseinheit EU übertragen wird.

Es können analog weitere Zwischenspeicher vorgesehen sein (Überschreitung von vier, fünf, ... Differenzspannungswerten).

Mit dieser Anordnung kann der Spannungseinbruch von 10 bis 50 Volt bei einpoliger Unterbrechung des mechanischen Trennkontaktsystems bzw. von 20 bis 100 Volt bei zweipoliger Unterbrechung des mechanischen Trennkontaktsystems ermittelt werden.

Es können weitere Funktionen durch die Steuerungseinheit SE bzw. die Abschaltlogik ASL realisiert werden, wie nachfolgend dargestellt.

Figur 2 zeigt weiterhin eine Ausgestaltung, bei der eine mit der Steuerungseinheit verbundene Stromermittlung vorgesehen ist, so dass die Änderung des Stromes nach der Zeit des Niederspannungsstromkreises periodisch ermittelt wird, so dass taktweise Stromänderungswerte vorliegen. Die Ermittlung der Änderung des Stroms nach der Zeit kann beispielsweise im Stromsensor SI selbst oder in der Steuerungseinheit SE erfolgen. Die Stromänderungswerte werden einem zweiten Komparator COMP2 zugeführt, der jeden Stromänderungswert mit einem zweiten Schwellwert vergleicht. Der Ausgang des zweiten Komparators COMP2 ist ferner einerseits direkt und andererseits über einen dritten Zwischenspeicher Z3, der genau einen Komparator-Ausgangswert (taktweise) zwischenspeichert, mit einem dritten Und-Glied AND3 verbunden, so dass bei Überschreitung zweier aufeinanderfolgender Stromänderungswerte eine Unterbrechung des Niederspannungsstromkreises initiiert wird, beispielsweise durch das Unterbrechungssignal TRIP, das von der Steuerungseinheit SE zur elektronischen Unterbrechungseinheit EU übertragen wird.

Allgemein können weitere Zwischenspeicher vorgesehen sein (Überschreitung von drei, vier, fünf, ... Stromänderungswerten) .

Figur 2 zeigt weiterhin eine Ausgestaltung, bei der die Ausgänge der Komparatoren COMP1, COMP2 über ein zweites Und-Glied AND2 logisch verknüpft sind, so dass bei Überschreitung des ersten und zweiten Schwellwertes, idealerweise des gleichen Taktes oder des vorhergehenden/nachfolgenden bzw. benachbarten Taktes, eine Unterbrechung des Niederspannungsstromkreises initiiert wird, beispielsweise durch das Unterbrechungssignal TRIP, das von der Steuerungseinheit SE zur elektronischen Unterbrechungseinheit EU übertragen wird.

Figur 2 zeigt weiterhin eine Ausgestaltung, bei der die Ausgänge des ersten, zweiten und dritten Und-Gliedes AND1, AND2, AND3 über ein Oder-Glied OR zusammengefasst sind, so dass

- bei Überschreitung von mindestens zwei aufeinanderfolgenden Differenzspannungswerten oder
- bei Überschreitung von mindestens zwei aufeinanderfolgenden Stromänderungswerten oder
- bei Überschreitung des ersten und zweiten Schwellwertes innerhalb des ersten Zeitfensters

eine Unterbrechung des Niederspannungsstromkreises initiiert wird, beispielsweise durch das Unterbrechungssignal TRIP, das in diesem Fall vom Oder-Glied OR abgegeben wird.

Die (periodische) Ermittlung der Differenzspannungswerte bzw. ggfs. Stromänderungswerte bzw. der Spannungswerte und ggfs. Stromwerte, beispielsweise im Spannungssensor SU bzw. Stromsensor SI bzw. in der Steuerungseinheit SE, erfolgt mit einer Taktfrequenz, die größer/gleich 10 kHz und kleiner/gleich 10 MHz ist, spezieller größer/gleich 10 kHz und kleiner/gleich 1 MHz ist. So liegen taktweise Differenzspannungswerte bzw. ggfs. Stromänderungswerte bzw. Spannungswerte und ggfs. taktweise Stromwerte mit einem zeitlichen Abstand von 100 $\mu$s bis 0,1 $\mu$s, spezieller von 100 $\mu$s bis 1 $\mu$s vor. So können der Differenzspannungswerte bzw. ggfs.

Stromänderungswerte des gleichen Taktes, falls gleich getaktete Werte vorliegen, mit den Schwellwerten verglichen werden. Alternativ Differenzspannungswert bzw. ggfs. Stromänderungswert zeitlich korrespondierende Takte, falls zwischen Spannungswerten und Stromwerten ein zeitlicher Abstand, Taktunterschied, besteht. Der zeitliche Abstand sollte nicht größer als ein Takt der Abtastung sein. D.h. abhängig von der Abtastrate ist das erste Zeitfenster genau ein Takt der Abtastrate lang. D.h. z.B. bei einer Abtastrate von 100 kHz ist der Takt 10ps, d.h. der Abstand zwischen zwei Abtastwerten ist 10 $\mu$s, d.h. das erste Zeitfenster ist dann maximal 10 us.

Erfindungsgemäß kann in einem Schutzschaltgerät SG nur noch eine Spannungsmessung im Gerät integriert sein. Beispielsweise in Form von Spannungssensoren SU. Der Spannungssensor SU soll bevorzugt eine Bandbreite aufweisen, die größer als die Taktfrequenz ist. Analoges gilt für den optionalen Stromsensor. Der Stromsensor SI kann beispielsweise einen Messwiderstand respektive Shunt aufweisen. Der Spannungssensor SU wird (alleinig) für die Erkennung von manuellen Schaltvorgängen des mechanischen Trennkontaktsystem verwendet.

Die Messwertverarbeitung und die Abschaltlogik können, z.B.: in der Steuerungseinheit SE, sowohl in Analogtechnik, in einem Rechner, wie einem Mikrocontroller ($\mu$C) oder einem Field Programmable Gate Array (FPGA) bzw. teilweise in Analogtechnik und teilweise in einem Rechner implementiert sein.

In einer anderen Variante zur Ermittlung des Spannungseinbruchs, die im Folgenden beschrieben wird, werden durch den Spannungssensor SU, zur Ermittlung der Höhe der Spannung des Niederspannungsstromkreises, momentane Spannungswerte DU (phasenbezogene Spannungswerte) ermittelt.

Das Schutzschaltgerät SG, insbesondere die Steuerungseinheit SE, ist derart ausgestaltet, dass momentane (phasenwinkelbezogene) Schwellwerte vorliegen. Beispielsweise könnte in einem einfachen Fall die Sinuskurve der Spannung, beispielsweise mit 230 Volt Effektivwert, deren Amplitude bei 325 Volt liegt, pro Phasenwinkel mit Ihrem erwarteten momentanen Spannungswert abzüglich eines Abschlags von beispielsweise 10% oder einem Wert zwischen 10 bis 30% oder einem festen Abschlag von mindestens 10 Volt als momentaner Schwellwert hinterlegt sein, wobei als minimaler momentaner Schwellwert ein Wert von mindestens 10 Volt verwendet wird (um Fehlauslösungen zu vermeiden). Bei einem Abschlag von beispielsweise 10%: 10 Volt bei 0° (minimaler momentaner Schwellwert), ..., 146,25 Volt (162,5 Volt - 10 %) bei 30°, ..., 206,8 Volt (229, 8 Volt - 10%) bei 45°, ..., 253,3 Volt (281,4 Volt - 10 %) bei 60°, 292,5 Volt (325 Volt - 10 %) bei 90°, usw.

Die momentanen Schwellwerte können dabei pro einzelnen Phasenwinkel, einen Phasenwinkelbereich (mehrere Phasenwinkel), z.B. alle 2°, oder einen Phasenwinkelabschnitt (ein Teil eines Phasenwinkels), z.B. alle 0,5° vorliegen.

Die momentanen Schwellwerte werden entsprechend für den manuellen Betätigungsvorgang zu erwartenden Spannungseinbruch angepasst.

Die momentanen Spannungswerte DU werden, vorzugsweise betragsmäßig, mit den momentanen Schwellwerten phasenwinkelbezogen verglichen. Bei Unterschreitung oder Überschreitung der momentanen Schwellwerte wird eine Betätigung erkannt.

Wird auf eine Betragsbildung verzichtet, wird zur Erkennung in der positiven Halbwelle auf eine Unterschreitung der momentanen Schwellwerte geprüft, in der negativen Halbwelle auf eine Überschreitung der momentanen Schwellwerte geprüft. Alternativ können auch die Beträge der momentanen Spannungswerte DU ermittelt werden. Die Beträge werden dann gegen eine Unterschreitung (der Beträge) der momentanen Schwellwerte geprüft, womit vorteilhaft eine Vorzeichenberücksichtigung entfällt. Der Vergleich erfolgt phasenwinkelbezogen, d.h. der momentane Spannungswert von z.B. 30° Phasenwinkel der Spannung wird gegen den momentanen Schwellwert von 30° Phasenwinkel der Spannung geprüft.

Alternativ kann (fortlaufend) aus dem momentanem Schwellwert (ggfs. dessen Betrag) und dem momentanen Spannungswert DU (ggfs. dessen Beitrag) ein (momentaner) Differenzspannungswert gebildet werden. Der (momentane) Differenzspannungswert wird mit einem (absoluten oder momentanen) Differenzspannungsschwellwert verglichen und bei dessen Überschreitung (oder Unterschreitung - bei vorzeichenbehaftetem Vergleich) eine Betätigung erkannt.

Alternativ kann ebenfalls eine Korridorüberprüfung erfolgen, d.h. weist der momentane Spannungswert mehr als ein bestimmter Prozentsatz, insbesondere 5 bis 15%, bzw. einen bestimmten +/- Spannungbetrag, insbesondere 10 bis 40 Volt, vom erwarteten Schwellwert bzw. erwarteten Spannungswert ab, erfolgt eine Erkennung der Betätigung und vorteilhaft eine (sofortige) Initiierung der (elektronischen) Unterbrechung des Niederspannungsstromkreises.

Die Erkennung einer Betätigung erfolgt beispielsweise durch ein (erstes) Signal TRIP, dass von der Steuerungseinheit SE zur elektronischen Unterbrechungseinheit EU gesendet wird, wie in Figur 1 eingezeichnet.

Die Unterschreitung oder Überschreitung kann vorteilhaft für eine erste Zeitspanne respektive für einen Phasenwinkelbereich oder Phasenwinkelabschnitt vorliegen, um eine Erkennung der Betätigung zu verifizieren.

Figur 3 zeigt eine Darstellung gemäß Figur 1, mit einer weiteren detaillierten Ausgestaltung. Hierbei weist die Steuerungseinheit SE zwei Teileinheiten auf, eine, bevorzugt analoge, erste Teileinheit SEA und eine, bevorzugt digitale, zweite Teileinheit SED. Die erste Teileinheit SEA weist hierbei einen Spannungskomparator CU auf. Diesem werden einerseits die, vorzugsweise betragsmäßigen, momentanen Spannungswerte DU des Spannungssensors SU zugeführt. Andererseits werden dem Spannungskomparator CU die momentanen Schwellwerte SWU von der zweiten Teileinheit SED zugeführt.

Der Spannungskomparator CU vergleicht die momentanen Spannungswerte DU mit den momentanen Schwellwerten SWU und gibt, wie beschrieben bei Überschreitung oder Unterschreitung, ein Spannungsunterbrechungssignal TU, zur Erkennung einer Betätigung und möglicher Initiierung einer Unterbrechung des Niederspannungsstromkreises, ab.

Das Spannungsunterbrechungssignal TU kann einer Logikeinheit LG zugeführt werden, die es mit anderen Unterbrechungssignalen kombiniert und das (erste) Signal TRIP zur halbleiterbasierten Unterbrechung bzw. hochohmigen Unterbrechung an die elektronische Unterbrechungseinheit EU abgibt.

In einer Ausgestaltung speichert der Spannungskomparator CU die momentanen Schwellwerte SWU zwischen, um die Werte ständig zur Verfügung zu haben.

Die momentanen Spannungswerte DU werden zudem der zweiten Teileinheit SED zugeführt. In einer bevorzugten Ausgestaltung werden die momentanen Spannungswerte DU dort durch einen Analog-Digital-Umsetzer ADC digitalisiert und einem Mikroprozessor CPU zugeführt. Dieser führte eine Ermittlung bzw. Berechnung der momentanen Schwellwerte SWU durch. Die durch die zweite Teileinheit SED bzw. insbesondere den Mikroprozessor CPU ermittelten momentanen Schwellwerte SWU werden wiederum der ersten Teileinheit SEA zugeführt, insbesondere dem Spannungskomparator CU, um den oben beschriebenen Vergleich durchzuführen.

Dabei kann vorteilhaft die Ermittlung der momentanen Schwellwerte SWU in der zweiten Teileinheit SED digital erfolgen bzw. mit einer langsameren Verarbeitungsgeschwindigkeit als der fortlaufende Vergleich von Spannungswerten und Schwellwerten in der ersten Teileinheit SEA.

In einer vorteilhaften Ausgestaltung, bei der ein Stromsensor SI vorgesehen ist, der die Höhe des Stromes, d.h. momentane Stromwerte DI abgibt, kann die erste Teileinheit SEA einen Stromkomparator CI aufweisen. Diesem werden einerseits die momentanen Stromwerte DI des Stromsensors SI zugeführt. Andererseits werden dem Stromkomparator CI momentane Stromschwellwerte SWI von der zweiten Teileinheit SED zugeführt. Der Stromkomparator CI vergleicht die momentanen Stromwerte DI mit den momentanen Stromschwellwerten SWI und gibt in analoger Weise bei betragsmäßiger Überschreitung des Stromes ein Stromunterbrechungssignal TI, zur Initiierung einer Unterbrechung des Niederspannungsstromkreises, ab.

Das Stromunterbrechungssignal TI kann der Logikeinheit LG zugeführt werden, die es mit anderen Unterbrechungssignalen kombiniert und das (erste) Signal TRIP zur halbleiterbasierten Unterbrechung bzw. hochohmigen Unterbrechung an die elektronische Unterbrechungseinheit EU abgibt.

In einer Ausgestaltung speichert der Stromkomparator CI die momentanen Stromschwellwerte SWI zwischen, um die Werte ständig zur Verfügung zu haben.

Die momentanen Stromwerte DI können zudem der zweiten Teileinheit SED zugeführt werden. In einer bevorzugten Ausgestaltung werden die momentanen Stromwerte DI dort durch den Analog-Digital-Umsetzer ADC digitalisiert und dem Mikroprozessor CPU zugeführt. Dieser führte eine Ermittlung bzw. Berechnung der momentanen Stromschwellwerte SWI durch. Die durch die zweite Teileinheit SED bzw. insbesondere den Mikroprozessor CPU ermittelten momentanen Stromschwellwerte SWI werden wiederum der ersten Teileinheit SEA zugeführt, insbesondere dem Stromkomparator CI um den oben beschriebenen Vergleich durchzuführen.

Dabei kann vorteilhaft die Ermittlung der momentanen Stromschwellwerte SWI in der zweiten Teileinheit SED digital erfolgen bzw. mit einer langsameren Verarbeitungsgeschwindigkeit als der fortlaufende Vergleich von Stromwerten und Schwellwerten in der ersten Teileinheit SEA.

Figur 4 zeigt eine weitere Ausgestaltung bzw. Variante gemäß Figur 1 und Figur 3. Figur 4 zeigt einen Teil einer einfachen Variante der ersten Teileinheit SEAE und einen Teil einer alternative Variante der zweiten Teileinheit SEDE.

Der Teil der einfachen Variante der ersten Teileinheit SEAE weist den Spannungskomparator CU auf, dem die momentanen Spannungswerte DU, insbesondere deren Betrag, und die momentanen Schwellwerte SWU, insbesondere ebenso betragsbezogen, zugeführt werden. Der Spannungskomparator CU gibt in diesem Beispiel direkt das erste Signal TRIP zur Unterbrechung des Niederspannungsstromkreises ab, analog zu Figur 3. Die Betragsbildung kann durch eine oder weitere, nicht dargestellte Einheiten erfolgen.

Der Teil der alternativen Variante der zweiten Teileinheit SEDE weist eine Netzsynchronisationseinheit NSE auf. Dieser werden die (analogen) momentanen Spannungswerte DU zugeführt. Die Netzsynchronisationseinheit NSE ermittelt aus den zugeführten (analogen) momentanen Spannungswerte DU, die eine sinusförmige Wechselspannung des Niederspannungsstromkreises sind, die Amplitude U, den Phasenwinkel $\varphi(t)$ und einen erwarteten Zeitwert der Spannung UE respektive Erwartungswert der Spannung UE. Der Erwartungswert der Spannung UE ist eine Art gefilterter bzw. regenerierter bzw. erzeugter äquivalenter momentaner Spannungswert DU.

Der Erwartungswert der Spannung UE, als auch die Amplitude U und der Phasenwinkel $\varphi(t)$, können beispielsweise durch eine so genannte Phase Locked Loop respektive Phasenregelschleife, kurz PLL, ermittelt werden. Eine PLL ist eine elektronische Schaltungsanordnung, die die Phasenlage und damit zusammenhängend die Frequenz eines veränderbaren Oszillators über einen geschlossenen Regelkreis so beeinflusst, dass die Phasenabweichung zwischen einem äußeren periodischen Referenzsignal (momentane Spannungswerte) und dem Oszillator oder einem daraus abgeleiteten Signal möglichst konstant ist.

Damit kann u.a. die Grundfrequenz und deren Amplitude der zugeführten Netzspannung, d.h. der ermittelten Spannungswerte, ermittelt werden, d.h. der (ungestörte bzw. gefilterte) Erwartungswert der (Netz-)Spannung.

Die von der Netzsynchronisationseinheit NSE ermittelte Amplitude U, Phasenwinkel $\varphi(t)$ und erwartete Zeitwert der Spannung UE werden einer Schwellwerteinheit SWE zugeführt. Die Schwellwerteinheit SWE modifiziert den Erwartungswert der Spannung UE zu einem momentanen Schwellwert SWU, wobei beispielsweise ein:

- fester Spannungsbetrag vom Erwartungswert der Spannung UE abgezogen werden kann, beispielsweise der zu prüfende Spannungseinbruch, oder
- ein vom Phasenwinkel abhängiger Spannungsbetrag vom Erwartungswert der Spannung UE abgezogen werden kann, beispielsweise proportional zum zu prüfenden Spannungseinbruch, oder
- ein fester Prozentsatz der Spannung vom Erwartungswert der Spannung UE abgezogen werden kann, beispielsweise proportional zum zu prüfenden Spannungseinbruch, oder
- ein vom Phasenwinkel abhängiger Prozentsatz der Spannung vom Erwartungswert der Spannung UE abgezogen werden kann, beispielsweise proportional zum zu prüfenden Spannungseinbruch, um den momentanen Schwellwert SWU zu erhalten.

Der momentane Schwellwert SWU kann ferner durch die Amplitude U der momentanen Spannung angepasst, d.h. dass bei hoher Amplitude der Spannung ein hoher momentaner Schwellwert und bei niedriger Amplitude der Spannung ein niedriger momentaner Schwellwert vorliegt, um sicher den Spannungseinbruch zu detektieren.

Die momentanen Schwellwerte SWU können durch das Vorliegen des Phasenwinkels $\varphi(t)$ in der Schwellwerteinheit SWE von dieser synchron zur momentanen Spannung DU an den Spannungskomparator CU übermittelt werden, so dass ein phasenbezogener (phasenwinkelbezogener) Vergleich zwischen momentanen Schwellwert und momentanen Spannungswert im Spannungskomparator CU erfolgen kann.

Figur 5 zeigt eine alternative Ausgestaltung gemäß Figur 3 bzw. 4, mit dem Unterschied, dass der Erwartungswert der Spannung UE nicht der Schwellwerteinheit SWE, sondern einer Differenzeinheit DE zugeführt wird. Ferner wird der momentane Spannungswert DU nicht dem Spannungskomparator CU, sondern der Differenzeinheit DE zugeführt. Die Differenzeinheit DE bildet eine Differenz aus Erwartungswert der Spannung UE und momentanen Spannungswert DU, wobei die phasenwinkelbezogen bzw. phasenwinkelgenau erfolgt. So wird ein (phasenwinkelabhängiger) Differenzspannungswert DW erzeugt, der dem Spannungskomparator CU zugeführt wird. Dem Spannungskomparator CU wird andererseits der momentane Schwellwert SWU zugeführt, der in diesem Beispiel phasenbezogen und Amplitudenbeeinflusst als (phasenbezogenen) Differenzspannungsschwellwert von der Schwellwerteinheit SWE bereitgestellt wird.

Der von der Netzsynchronisationseinheit, insbesondere in Form einer PLL, abgegebene Erwartungswert der Spannung UE wird in diesem Beispiel mit dem momentanen Spannungswert DU verglichen, insbesondere zeit- bzw. phasensynchron, so dass eine Differenz der Werte DW vorliegt. Häufig kann eine PLL selbst eine derartige Funktion durchführen, d.h. die Differenz abgeben, d.h. einen Differenzspannungswert DW.

Der Differenzspannungswert DW wird dann, insbesondere betragsmäßig, mit dem momentanen Schwellwert SWU, in diesem Fall ein Differenzspannungsschwellwert, der dem zu prüfenden Spannungseinbruch entspricht, verglichen.

Auch alternative Ausgestaltungen sind denkbar.

Der zeitliche Verlauf der Spannung wird hinsichtlich des Spannungseinbruchs geprüft. Durch phasengenauen Vergleich mit der erwarteten Spannung kann eine sehr schnelle Erkennung erfolgen.

Die Phasenwinkelauflösung bestimmt die Schnelligkeit der Berechnung der Schwellwerte. Bei einer Phasenwinkelauflösung von 1°, d.h. für jeden vollen Phasenwinkel der Spannung liegt ein Schwellwert vor, d.h. etwa alle 55,5 μs liegt ein momentaner Schwellwert vor. Die Abschaltung erfolgt über bevorzugt über einen analogen Komparator, d.h. kontinuierlich, und ist damit deutlich schneller als die Phasenwinkelauflösung.

Alternativ gilt bei einer voll digitalen Verarbeitung der folgende zeitliche Verlauf. Die Phasenwinkelauflösung bestimmt die Schnelligkeit der Erkennung. Bei einer Phasenwinkelauflösung von 1°, d.h. für jeden vollen Phasenwinkel der Spannung liegt ein Schwellwert vor, d.h. etwa alle 55,5 μs liegt ein momentaner Schwellwert vor, bedeutet dies, dass eine Abschaltung nach minimal ca. 60us erfolgen kann. Bei höheren Phasenwinkelauflösungen lassen sich kürzere Abschaltzeiten erreichen.

In diesem Beispiel erfolgt dann eine Verarbeitung der Werte mit mindestens 18 kHz.

Alternativ kann der Erwartungswert der Spannung in einer Tabelle abgelegt sein, wobei dann phasensynchron die jeweiligen Spannungswerte verglichen werden bzw. eine phasensynchrone Differenz gebildet wird, so dass Differenzspannungswerte vorliegen.

Figur 6 zeigt ein Diagramm mit der Spannung [V] in Volt, auf der linken vertikalen Achse, und der Zeit t [ms] in Millisekunden, auf der horizontalen Achse. Dargestellt ist eine Periode einer sinusförmigen Wechselspannung (der Netzspannung), im Beispiel der Höhe der Spannung DU des Niederspannungswechselstromkreises für eine Periodendauer, in diesen Fall 20 ms (f=50 Hz). Weiterhin dargestellt ist der Betrag der sinusförmigen Wechselspannung abs(DU) über der Zeit t [ms].

Ferner ist der Verlauf eines ersten (Spannungs-)Schwellwertes SWU, konkret eines unteren Schwellwertes SWU_low für eine Periodendauer der Spannung über der Zeit dargestellt.

Des Weiteren ist der Verlauf eines zweiten (Spannungs-) Schwellwertes SWU, konkret eines oberen Schwellwertes SWU_high für eine Periodendauer der Spannung über der Zeit dargestellt.

Unterer und oberer Schwellwert SWU_low, SWU_high können einen Schwellwertkorridor bilden (Korridor), wie in Figur 6 eingezeichnet.

In einer vorteilhaften Ausgestaltung wird der Betrag des Erwartungswertes der Spannung für die Berechnung des unteren (Spannungs-) Schwellwert-Verlaufes SWU_low herangezogen. Der Schwellwertverlauf SWU_low über der Zeit, d.h. der momentanen unteren Schwellwerte, berechnet sich in diesem Fall aus dem (momentanen) Erwartungswert des Betrages der Spannung, im einfachsten Fall des momentanen Netzspannungswertes, multipliziert mit einen Skalierungsfaktor, insbesondere einem Wert aus dem Bereich 0,85 bis 0,99 oder 1; sowie einer Subtraktion eines festen Spannungswertes, insbesondere einem Wert aus dem Bereich 10 bis 40 oder 50 Volt.

In einer vorteilhaften Ausgestaltung wird analog der Betrag des oberen (Spannungs-) Schwellwertes SWU_high berechnet. Der (momentane) obere Schwellwert SWU_high berechnet sich in diesem Fall aus dem (momentanen) Betrag des Erwartungswertes der Spannung (Netzspannungsverlauf), dividiert mit einen Skalierungsfaktor, insbesondere einem Wert aus dem Bereich 0,85 bis 0,99 oder 1; sowie einer Addition eines festen Spannungswertes, insbesondere einem Wert aus dem 10 bis 100 Volt, insbesondere unabhängig von der Polzahl (Anzahl der Pole bzw. Kontakte / unterbrechenden Leiter) des mechanischen Trennkontaktsystems MK.

Der untere und der obere (Spannungs-) Schwellwert-Verlauf bilden zusammen einen Korridor. Verlässt die Höhe der (momentan) gemessenen/ermittelten Spannung diesen Korridor, wird eine Öffnung (Betätigung) des mechanischen Trennkontaktsystems erkannt.

Figur 7 zeigt eine Darstellung gemäß Figur 6, mit dem Unterschied, dass der zeitliche Verlauf der (Spannungs-) Schwellwerte SWU_low, SWU_high im Detail für den Spannungsnulldurchgang, in diesem Fall bei t = 10 ms, dargestellt sind. Neben der Darstellung des zeitlichen Verlaufes der Spannung DU ist auch dessen Betrag abs(DU) dargestellt, wie in Figur 6.

Um Fehlauslösungen zu vermeiden wird ein Mindestabstand zum ermittelten Höhe der Spannung benötigt. Hierzu soll in einer vorteilhaften Ausgestaltung der Erfindung insbesondere für kleine momentane Spannungen (<20V, <30V, <40V), nahe dem Nulldurchgang, der momentane untere Schwellwert bzw. die untere Spannungsschwellwertkurve SWU_low unterhalb der Nulllinie verlaufen, wie in Figur 7 eigezeichnet. Eine Spannungseinbruch würde in diesem Fall nicht erkannt werden, dies stellt jedoch kein Nachteil für die Lösung dar.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Schutzschaltgerät (SG) zum Schutz eines elektrischen Niederspannungsstromkreis aufweisend:

   - ein Gehäuse (GEH) mit netzseitigen (L1, N1) und lastseitigen (L2, N2) Anschlüssen für Leiter des Niederspannungswechselstromkreises,
   - einem mit den netzseitigen Anschlüssen (L1, N1) verbundenen mechanischen Trennkontaktsystem (MK) zur galvanischen Unterbrechung des Niederspannungsstromkreises, das andererseits mit einer elektronischen Unterbrechungseinheit (EU), die durch halbleiterbasierte Schaltelemente einen hochohmigen Zustand der Schaltelemente zur Unterbrechung und einen niederohmigen Zustand der Schaltelemente zum Stromfluss im Niederspannungsstromkreis aufweist, verbunden ist,
   wobei die elektronische Unterbrechungseinheit (EU) andererseits mit den lastseitigen Anschlüssen (L2, N2) verbunden ist,
   - einem Spannungssensor (SU),
   - wobei
   das mechanische Trennkontaktsystem (MK) manuell betätigbar ist, so dass Kontakte des mechanischen Trennkontaktsystem (MK) manuell für einen Stromfluss geschlossen und für eine Unterbrechung im Niederspannungsstromkreis geöffnet werden können,
   - einer Steuerungseinheit (SE), die mit dem Spannungssensor (SU) und der elektronischen Unterbrechungseinheit (EU) verbunden ist,

   **dadurch gekennzeichnet, dass** der Spannungssensor (SU) zwischen mechanischem Trennkontaktsystem (MK) und elektronischer Unterbrechungseinheit (EU) angeordnet ist, zur Ermittlung der dortigen Höhe der Spannung des Niederspannungsstromkreises, und dass
   das Schutzschaltgerät (SG) derart ausgestaltet ist,
   dass die Höhe der Spannung ermittelt wird und bei einem Spannungseinbruch

   - von 10 bis 50 Volt bei einem einpolig unterbrechenden mechanischen Trennkontaktsystem (MK) oder
   - von 20 bis 100 Volt bei einem zweipolig unterbrechendem mechanischen Trennkontaktsystem (MK) oder
   - auf kleiner 10 Volt

   eine Öffnung des mechanischen Trennkontaktsystem (MK) erkannt wird.

2. Schutzschaltgerät (SG) nach Patentanspruch 1,
   **dadurch gekennzeichnet,**

   **dass** die Höhe der Spannung (DU) mit einem momentanen unteren Schwellwert (SWU_low) verglichen wird, wobei der momentane untere Schwellwert (SWU_low) aus dem Betrag eines momentanen Erwartungswertes der Spannung (UE) multipliziert mit einem Skalierungsfaktor, insbesondere 0,85 bis 1, und subtrahiert mit einem festen Spannungswert, insbesondere 10 bis 50 Volt bei einem einpolig unterbrechenden oder 20 bis 100 Volt bei einem zweipolig unterbrechendem mechanischen Trennkontaktsystem (MK), gebildet wird,
   **dass** bei Unterschreitung des momentanen unteren Schwellwertes (SWU_low) eine Öffnung des mechanischen Trennkontaktsystem (MK) erkannt wird.

3. Schutzschaltgerät (SG) nach Patentanspruch 1 oder 2,
   **dadurch gekennzeichnet,**

   **dass** die Höhe der Spannung (DU) mit einem momentanen oberen Schwellwert (SWU_high) verglichen wird, wobei der momentane obere Schwellwert (SWU_high) aus dem Betrag eines momentanen Erwartungswertes der Spannung (UE) dividiert mit einem Skalierungsfaktor, insbesondere 0,85 bis 1, und addiert mit einem festen Spannungswert, insbesondere 10 bis 100 Volt unabhängig von der Polzahl des mechanischen Trennkontaktsystem (MK), gebildet wird,
   **dass** bei Überschreitung des momentanen oberen Schwellwertes (SWU_high) eine Öffnung des mechanischen Trennkontaktsystem (MK) erkannt wird.

4. Schutzschaltgerät (SG) nach einem der vorhergehenden Patentansprüche,
**dadurch gekennzeichnet,**
**dass** bei einer Erkennung der Öffnung des mechanischen Trennkontaktsystems (MK) die halbleiterbasierten Schaltelemente der elektronischen Unterbrechungseinheit (EU), insbesondere innerhalb einer ersten Zeitspanne, insbesondere kleiner als 100 μs, spezieller kleiner als 50 μs oder 10 μs, in einen hochohmigen Zustand wechseln, zur Vermeidung vom Schaltlichtbogen verursachten Kontaktabbrand bzw. zeitlichen Reduzierung der Schaltlichtbogendauer des mechanischen Trennkontaktsystems.

5. Schutzschaltgerät (SG) nach einem der vorhergehenden Patentansprüche,
**dadurch gekennzeichnet,**
**dass** das Schutzschaltgerät (SG) eine Kommunikationseinheit aufweist, dass bei einer Erkennung der Öffnung des mechanischen Trennkontaktsystems (MK) mindestens eine Information durch die Kommunikationseinheit abgegeben wird.

6. Schutzschaltgerät (SG) nach einem der vorhergehenden Patentansprüche,
**dadurch gekennzeichnet,**
**dass** das Schutzschaltgerät (SG) eine Anzeigeeinheit aufweist, dass bei einer Erkennung der Öffnung des mechanischen Trennkontaktsystems (MK) eine Information durch die Anzeigeeinheit angezeigt wird.

7. Schutzschaltgerät (SG) nach einem der vorhergehenden Patentansprüche,
**dadurch gekennzeichnet,**
**dass** das Schutzschaltgerät (SG) einen Speicher aufweist, dass bei einer Erkennung der Öffnung des mechanischen Trennkontaktsystems (MK) eine Information im Speicher gespeichert wird.

8. Schutzschaltgerät (SG) nach einem der vorhergehenden Patentansprüche,
**dadurch gekennzeichnet,**
**dass** ein weiterer Spannungssensor zwischen netzseitigem Anschluss und mechanischen Trennkontaktsystem (MK) vorgesehen ist.

9. Schutzschaltgerät (SG) nach Patentanspruch 8,
**dadurch gekennzeichnet,**
**dass** der weitere Spannungssensor eine Spannungsermittlung nur dahingehend durchführt, ob eine Spannung an den netzseitigen Anschlüssen anliegt, insbesondere ob eine gültige Netzspannung anliegt.

10. Schutzschaltgerät (SG) nach Patentanspruch 8,
**dadurch gekennzeichnet,**

**dass** der weitere Spannungssensor die dortige Höhe der Spannung ermittelt,
**dass** der Spannungseinbruch durch eine Differenzbildung der Spannungen der beiden Spannungssensoren ermittelt wird.

11. Schutzschaltgerät (SG) nach Patentanspruch 8, 9 oder 10, **dadurch gekennzeichnet,**
**dass** der weitere Spannungssensor galvanisch getrennt von den anderen Einheiten des Schutzschaltgerätes (SG) ist, insbesondere mindestens einen Optokoppler oder kapazitive Elemente aufweist.

12. Schutzschaltgerät (SG) nach einem der vorhergehenden Patentansprüche,
**dadurch gekennzeichnet,**
**dass** das Schutzschaltgerät (SG) eine Energieversorgung mit einem Energiespeicher aufweist, die derart ausgestaltet ist, dass nach einem Öffnungsvorgang der Kontakte des mechanischen Trennkontaktsystems (MK) ausreichend Energie für:

- einen Wechsel der halbleiterbasierten Schaltelemente in den hochohmigen Zustand oder
- einer Abgabe der Information durch die Kommunikationseinheit oder
- einer Anzeige der Information durch die Anzeigeeinheit oder
- einen Wechsel des Schutzschaltgerätes in einen definierten Zustand, inklusive dem Speichern von Informationen, insbesondere über den Zeitpunkt der Betätigung oder/und Höhe der Spannung oder/und Stromes oder/und Frequenz

oder/und Temperatur, vorgesehen ist.

**13.** Schutzschaltgerät (SG) nach Patentanspruch 12, **dadurch gekennzeichnet,** **dass** eine Energieversorgung durch den Energiespeicher für eine Zeit von 1 ms bis 1 s, insbesondere 20 ms bis 100 ms oder bis 500 ms, nach einem Öffnungsvorgang der Kontakte des mechanischen Trennkontaktsystems (MK) zur Verfügung steht.

**14.** Verfahren für ein Schutzschaltgerät (SG) mit netzseitigen (L1, N1) und lastseitigen (L2, N2) Anschlüssen für Leiter (L, N) des Niederspannungswechselstromkreises,

einem mit den netzseitigen Anschlüssen (L1, N1) verbundenen mechanischen Trennkontaktsystem (MK) zur galvanischen Unterbrechung des Niederspannungsstromkreises, das andererseits mit einer elektronischen Unterbrechungseinheit (EU), die durch halbleiterbasierte Schaltelemente einen hochohmigen Zustand der Schaltelemente zur Unterbrechung und einen niederohmigen Zustand der Schaltelemente zum Stromfluss im Niederspannungsstromkreis aufweist, verbunden ist,
wobei die elektronische Unterbrechungseinheit (EU) andererseits mit den lastseitigen Anschlüssen (L2, N2) verbunden ist,
dass mechanische Trennkontaktsystem (MK) ist manuell betätigbar, so dass Kontakte des mechanischen Trennkontaktsystem (MK) manuell für einen Stromfluss geschlossen und für eine Unterbrechung im Niederspannungsstromkreis geöffnet werden können,
dass die Höhe der Spannung zwischen den Leitern (L, N) zwischen mechanischem Trennkontaktsystem (MK) und elektronischer Unterbrechungseinheit (EU) gemessen wird und bei einem Spannungseinbruch von 10 bis 50 Volt bei einem einpolig unterbrechenden oder von 20 bis 100 Volt bei einem zweipolig unterbrechendem mechanischen Trennkontaktsystem (MK) eine Öffnung des mechanischen Trennkontaktsystem (MK) erkannt wird.

**15.** Verfahren nach Patentanspruch 14, **dadurch gekennzeichnet,**

**dass** die Höhe der Spannung (DU) mit einem momentanen unteren Schwellwert (SWU_low) verglichen wird, wobei der momentane untere Schwellwert (SWU_low) aus dem Betrag eines momentanen Erwartungswertes der Spannung (UE) multipliziert mit einem Skalierungsfaktor, insbesondere 0,85 bis 1, und subtrahiert mit einem festen Spannungswert, insbesondere 10 bis 50 Volt bei einem einpolig unterbrechenden oder 20 bis 100 Volt bei einem zweipolig unterbrechendem mechanischen Trennkontaktsystem (MK), gebildet wird,
**dass** bei Unterschreitung des momentanen unteren Schwellwertes (SWU_low) eine Öffnung des mechanischen Trennkontaktsystem (MK) erkannt wird.

**16.** Verfahren nach Patentanspruch 14 oder 15, **dadurch gekennzeichnet,**

**dass** die Höhe der Spannung (DU) mit einem momentanen oberen Schwellwert (SWU_high) verglichen wird, wobei der momentane obere Schwellwert (SWU_high) aus dem Betrag eines momentanen Erwartungswertes der Spannung (UE) dividiert mit einem Skalierungsfaktor, insbesondere 0,85 bis 1, und addiert mit einem festen Spannungswert, insbesondere 10 bis 50 Volt bei einem einpolig unterbrechenden oder 20 bis 100 Volt bei einem zweipolig unterbrechendem mechanischen Trennkontaktsystem (MK), gebildet wird,
**dass** bei Überschreitung des momentanen oberen Schwellwertes (SWU_high) eine Öffnung des mechanischen Trennkontaktsystem (MK) erkannt wird.

## Claims

**1.** Circuit breaker device (SG) for protecting an electrical low-voltage circuit, having:

- a housing (GEH) having line-side (L1, N1) and load-side (L2, N2) connections for conductors of the low-voltage AC circuit,
- a mechanical isolating contact system (MK), connected to the line-side connections (L1, N1), for galvanically interrupting the low-voltage circuit, which is also connected to an electronic interruption unit (EU) that, due to semiconductor-based switching elements, has a high-resistance state of the switching elements for interrupting and a low-resistance state of the switching elements for allowing current to flow in the low-voltage circuit,

wherein the electronic interruption unit (EU) is also connected to the load-side connections (L2, N2),

- a voltage sensor (SU),
- wherein the mechanical isolating contact system (MK) is able to be actuated manually, such that contacts of the mechanical isolating contact system (MK) are able to be manually closed for a flow of current and opened for an interruption in the low-voltage circuit,
- a control unit (SE) that is connected to the voltage sensor (SU) and the electronic interruption unit (EU),

**characterized in that** the voltage sensor (SU) is arranged between the mechanical isolating contact system (MK) and electronic interruption unit (EU), for ascertaining the value of the voltage of the low-voltage circuit there, and **in that** the circuit breaker device (SG) is designed such that the value of the voltage is ascertained and, in the event of a voltage dip

- of 10 to 50 volts in the case of a mechanical isolating contact system (MK) with single-pole interruption or
- of 20 to 100 volts in the case of a mechanical isolating contact system (MK) with double-pole interruption or
- to less than 10 volts,

opening of the mechanical isolating contact system (MK) is identified.

**2.** Circuit breaker device (SG) according to Patent Claim 1, **characterized**

**in that** the value of the voltage (DU) is compared with an instantaneous lower threshold value (SWU_low), wherein the instantaneous lower threshold value (SWU_low) is formed from the absolute value of an instantaneous expected value of the voltage (UE) multiplied by a scaling factor, in particular 0.85 to 1, and minus a fixed voltage value, in particular 10 to 50 volts in the case of a mechanical isolating contact system (MK) with single-pole interruption or 20 to 100 volts in the case of a mechanical isolating contact system (MK) with double-pole interruption,
and **in that**, if the instantaneous lower threshold value (SWU_low) is fallen below, opening of the mechanical isolating contact system (MK) is identified.

**3.** Circuit breaker device (SG) according to Patent Claim 1 or 2,
**characterized**

**in that** the value of the voltage (DU) is compared with an instantaneous upper threshold value (SWU high), wherein the instantaneous upper threshold value (SWU high) is formed from the absolute value of an instantaneous expected value of the voltage (UE) divided by a scaling factor, in particular 0.85 to 1, and added to a fixed voltage value, in particular 10 to 100 volts independently of the number of poles of the mechanical isolating contact system (MK),
and **in that**, if the instantaneous upper threshold value (SWU_high) is exceeded, opening of the mechanical isolating contact system (MK) is identified.

**4.** Circuit breaker device (SG) according to one of the preceding patent claims,
**characterized**
**in that**, upon identification of the opening of the mechanical isolating contact system (MK), the semiconductor-based switching elements of the electronic interruption unit (EU) change, in particular within a first time interval, in particular less than 100 μs, more specifically less than 50 μs or 10 μs, to a high-resistance state in order to avoid contact erosion caused by the switching arc or reduce the time of the switching arc duration of the mechanical isolating contact system.

**5.** Circuit breaker device (SG) according to one of the preceding patent claims,
**characterized**
**in that** the circuit breaker device (SG) has a communication unit, and in that, upon identification of the opening of the mechanical isolating contact system (MK), at least one item of information is output by the communication unit.

**6.** Circuit breaker device (SG) according to one of the preceding patent claims,
**characterized**
**in that** the circuit breaker device (SG) has a display unit, and in that, upon identification of the opening of the mechanical isolating contact system (MK), information is displayed by the display unit.

**7.** Circuit breaker device (SG) according to one of the preceding patent claims,
**characterized**
**in that** the circuit breaker device (SG) has a memory, and in that, upon identification of the opening of the mechanical isolating contact system (MK), information is stored in the memory.

**8.** Circuit breaker device (SG) according to one of the preceding patent claims,
**characterized**
**in that** provision is made for a further voltage sensor between the line-side connection and mechanical isolating contact system (MK) .

**9.** Circuit breaker device (SG) according to Patent Claim 8, **characterized**
**in that** the further voltage sensor ascertains a voltage only to the extent as to whether a voltage is present at the line-side connections, in particular as to whether a valid line voltage is present.

**10.** Circuit breaker device (SG) according to Patent Claim 8, **characterized**
**in that** the further voltage sensor ascertains the value of the voltage there, and
**in that** the voltage drop is ascertained by calculating a difference between the voltages of the two voltage sensors.

**11.** Circuit breaker device (SG) according to Patent Claim 8, 9 or 10,
**characterized**
**in that** the further voltage sensor is galvanically isolated from the other units of the circuit breaker device (SG), in particular has at least one optocoupler or capacitive elements.

**12.** Circuit breaker device (SG) according to one of the preceding patent claims,
**characterized**
**in that** the circuit breaker device (SG) has an energy supply with an energy store, which energy supply is designed such that, following an opening procedure of the contacts of the mechanical isolating contact system (MK), enough energy is provided for:

- changing the semiconductor-based switching elements to the high-resistance state or
- outputting the information by way of the communication unit or
- displaying the information by way of the display unit or
- changing the circuit breaker device to a defined state, including storing information, in particular about the time of actuation or/and value of the voltage or/and current or/and frequency or/and temperature.

**13.** Circuit breaker device (SG) according to Patent Claim 12, **characterized**
**in that** an energy supply provided by the energy store is available for a time of 1 ms to 1 s, in particular 20 ms to 100 ms or 500 ms, following an opening procedure of the contacts of the mechanical isolating contact system (MK).

**14.** Method for a circuit breaker device (SG) having line-side (L1, N1) and load-side (L2, N2) connections for conductors (L, N) of the low-voltage AC circuit,

a mechanical isolating contact system (MK), connected to the line-side connections (L1, N1), for galvanically interrupting the low-voltage circuit, which is also connected to an electronic interruption unit (EU) that, due to semiconductor-based switching elements, has a high-resistance state of the switching elements for interrupting and a low-resistance state of the switching elements for allowing current to flow in the low-voltage circuit,
wherein the electronic interruption unit (EU) is also connected to the load-side connections (L2, N2),
the mechanical isolating contact system (MK) is able to be actuated manually, such that contacts of the mechanical isolating contact system (MK) are able to be manually closed for a flow of current and opened for an interruption in the low-voltage circuit,
the value of the voltage between the conductors (L, N) between the mechanical isolating contact system (MK) and electronic interruption unit (EU) is measured and, in the event of a voltage dip of 10 to 50 volts in the case of a mechanical isolating contact system (MK) with single-pole interruption or of 20 to 100 volts in the case of a mechanical isolating contact system (MK) with double-pole interruption, opening of the mechanical isolating contact system (MK) is identified.

**15.** Method according to Patent Claim 14,
**characterized**

**in that** the value of the voltage (DU) is compared with an instantaneous lower threshold value (SWU_low), wherein the instantaneous lower threshold value (SWU low) is formed from the absolute value of an instantaneous expected value of the voltage (UE) multiplied by a scaling factor, in particular 0.85 to 1, and minus a fixed voltage value, in particular 10 to 50 volts in the case of a mechanical isolating contact system (MK) with single-pole interruption or 20 to 100 volts in the case of a mechanical isolating contact system (MK) with double-pole interruption,
and **in that**, if the instantaneous lower threshold value (SWU_low) is fallen below, opening of the mechanical isolating contact system (MK) is identified.

**16.** Method according to Patent Claim 14 or 15,
**characterized**

**in that** the value of the voltage (DU) is compared with an instantaneous upper threshold value (SWU high), wherein the instantaneous upper threshold value (SWU high) is formed from the absolute value of an instantaneous expected value of the voltage (UE) divided by a scaling factor, in particular 0.85 to 1, and added to a fixed voltage value, in particular 10 to 50 volts in the case of a mechanical isolating contact system (MK) with single-pole interruption or 20 to 100 volts in the case of a mechanical isolating contact system (MK) with double-pole interruption,
and **in that**, if the instantaneous upper threshold value (SWU_high) is exceeded, opening of the mechanical isolating contact system (MK) is identified.

## Revendications

**1.** Disjoncteur de protection (SG) pour la protection d'un circuit électrique basse tension, présentant :

- un boîtier (GEH) avec des connexions côté réseau (L1, N1) et côté charge (L2, N2) pour les conducteurs du circuit de courant alternatif basse tension,
- un système de contact de coupure mécanique (MK) relié aux connexions côté secteur (L1, N1) pour l'interruption galvanique du circuit électrique basse tension, qui est relié par ailleurs à une unité d'interruption électronique (EU) qui présente, grâce à des éléments de disjonction à base de semi-conducteurs, un état à haute résistance des éléments de disjonction pour l'interruption et un état à basse résistance des éléments de disjonction pour le passage du courant dans le circuit électrique basse tension,
l'unité d'interruption électronique (EU) étant par ailleurs reliée aux connexions côté charge (L2, N2),
- d'un capteur de tension (SU),
- dans lequel le système de contact de coupure mécanique (MK) peut être actionné manuellement, de sorte que des contacts du système de contact de coupure mécanique (MK) peuvent être fermés manuellement pour un flux de courant et ouverts pour une interruption dans le circuit électrique basse tension,
- une unité de commande (SE) reliée au capteur de tension (SU) et à l'unité d'interruption électronique (EU),

**caractérisé en ce que** le capteur de tension (SU) est disposé entre le système de contact de coupure mécanique (MK) et l'unité d'interruption électronique (EU), pour déterminer la hauteur de la tension du circuit électrique basse tension à cet endroit, et **en ce que** le disjoncteur de protection (SG) est conçu de telle manière,
que le niveau de la tension soit déterminé et qu'en cas de chute de tension

- de 10 à 50 Volts pour un système de contact de coupure mécanique unipolaire (MK) ou
- de 20 à 100 Volts pour un système de contact de coupure mécanique bipolaire (MK) ou
- si la tension est inférieure à 10 Volts, une ouverture du système de contact de coupure mécanique (MK) est détectée.

**2.** Disjoncteur de protection (SG) selon la revendication 1,
**caractérisé en ce que**

l'amplitude de la tension (DU) est comparée à une valeur seuil inférieure momentanée (SWU_low), la valeur seuil inférieure momentanée (SWU_low) étant formée à partir de la valeur absolue d'une valeur attendue momentanée de la tension (UE) multipliée par un facteur d'échelle, en particulier de 0,85 à 1, et soustraite d'une valeur de tension fixe, en particulier de 10 à 50 Volts pour un système de contact de coupure mécanique (MK) à coupure unipolaire ou de 20 à 100 Volts pour un système de contact de coupure mécanique (MK) à coupure bipolaire,
**en ce que**, lorsque la valeur seuil inférieure momentanée (SWU_low) est dépassée par le bas, une ouverture du système de contact de coupure mécanique (MK) est détectée.

**3.** Disjoncteur de protection (SG) selon la revendication 1 ou 2,
**caractérisé en ce que**

l'amplitude de la tension (DU) est comparée à une valeur seuil supérieure momentanée (SWU_high), la valeur seuil supérieure momentanée (SWU_high) étant formée à partir de la valeur absolue d'une valeur attendue momentanée de la tension (UE) divisée par un facteur d'échelle, notamment de 0,85 à 1, et additionnée à une valeur de tension fixe, notamment de 10 à 100 Volts indépendamment du nombre de pôles du système de contact de coupure mécanique (MK),
**en ce que**, en cas de dépassement de la valeur seuil supérieure momentanée (SWU_high), une ouverture du système de contact de coupure mécanique (MK) est détectée.

**4.** Disjoncteur de protection (SG) selon l'une des revendications précédentes,
**caractérisé en ce que**
lors d'une détection de l'ouverture du système de contact de coupure mécanique (MK), les éléments de disjonction à base de semi-conducteurs de l'unité d'interruption électronique (EU) passent dans un état de haute résistance, en particulier en l'espace d'un premier laps de temps, en particulier inférieur à 100 μs, plus particulièrement inférieur à 50 μs ou 10 μs, afin d'éviter une usure des contacts provoquée par l'arc électrique de coupure ou de réduire dans le temps la durée de l'arc électrique de coupure du système de contact de coupure mécanique.

**5.** Disjoncteur de protection (SG) selon l'une des revendications précédentes,
**caractérisé en ce que**
le disjoncteur de protection (SG) présente une unité de communication, **en ce que** lors d'une détection de l'ouverture du système de contact de séparation mécanique (MK), au moins une information est délivrée par l'unité de communication.

**6.** Disjoncteur de protection (SG) selon l'une des revendications précédentes,
**caractérisé en ce que**
le disjoncteur de protection (SG) présente une unité d'affichage, **en ce que** lors d'une détection de l'ouverture du système de contact de coupure mécanique (MK), une information est affichée par l'unité d'affichage.

**7.** Disjoncteur de protection (SG) selon l'une des revendications précédentes,
**caractérisé en ce que**
le disjoncteur de protection (SG) présente une mémoire, **en ce que** lors d'une détection de l'ouverture du système de contact de séparation mécanique (MK), une information est enregistrée dans la mémoire.

**8.** Disjoncteur de protection (SG) selon l'une des revendications précédentes,
**caractérisé en ce que**
un autre capteur de tension est prévu entre le raccordement côté réseau et le système de contact de séparation mécanique (MK).

**9.** Disjoncteur de protection (SG) selon la revendication 8,
**caractérisé en ce que**
l'autre capteur de tension n'effectue une détermination de tension uniquement pour savoir si une tension est présente sur les connexions côté réseau, en particulier si une tension de réseau valide est présente.

**10.** Disjoncteur de protection (SG) selon la revendication 8,

**caractérisé en ce que**

l'autre capteur de tension détermine la hauteur de la tension à cet endroit,
**en ce que** la chute de tension est déterminée par une formation de différence des tensions des deux capteurs de tension.

**11.** Disjoncteur de protection (SG) selon la revendication 8, 9 ou 10,
**caractérisé en ce que**
l'autre capteur de tension est séparé galvaniquement des autres unités du disjoncteur de protection (SG), et dispose en particulier au moins d'un optocoupleur ou d'éléments capacitifs.

**12.** Disjoncteur de protection (SG) selon l'une des revendications précédentes,
**caractérisé en ce que**
le disjoncteur de protection (SG) présente une alimentation en énergie avec un accumulateur d'énergie qui est conçu de telle sorte qu'après un processus d'ouverture des contacts du système de contact de coupure mécanique (MK), suffisamment d'énergie est disponible pour :

- un passage des disjoncteurs à base de semi-conducteurs à l'état de haute résistance ou
- une délivrance de l'information par l'unité de communication, ou
- un affichage des informations par l'unité d'affichage, ou
- un changement du disjoncteur de protection dans un état défini, y compris la mémorisation d'informations, en particulier sur l'instant de l'actionnement ou/et le niveau de la tension ou/et du courant ou/et de la fréquence ou/et de la température, est prévu.

**13.** Disjoncteur de protection (SG) selon la revendication 12,
**caractérisé en ce que**
une alimentation en énergie par l'accumulateur d'énergie est disponible pendant une durée de 1 ms à 1 s, en particulier de 20 ms à 100 ms ou jusqu'à 500 ms, après une opération d'ouverture des contacts du système de contact de coupure mécanique (MK).

**14.** Procédé pour un disjoncteur de protection (SG) avec des connexions côté réseau (L1, N1) et côté charge (L2, N2) pour les conducteurs (L, N) du circuit de courant alternatif basse tension,

un système de contact de coupure mécanique (MK) relié aux connexions côté secteur (L1, N1) pour l'interruption galvanique du circuit électrique basse tension, qui est relié d'autre part à une unité d'interruption électronique (EU) qui présente, grâce à des éléments de disjonction à base de semi-conducteurs, un état à haute résistance des éléments de disjonction pour l'interruption et un état à basse résistance des éléments de disjonction pour le passage du courant dans le circuit électrique basse tension,
l'unité d'interruption électronique (EU) étant, d'autre part, connectée aux connexions côté charge (L2, N2),
le système de contact de coupure mécanique (MK) peut être actionné manuellement, de sorte que les contacts du système de contact de coupure mécanique (MK) peuvent être fermés manuellement pour un flux de courant et ouverts pour une interruption dans le circuit électrique basse tension,
en ce que l'on mesure le niveau de la tension entre les conducteurs (L, N) entre le système de contact de coupure mécanique (MK) et l'unité d'interruption électronique (EU) et en ce que l'on détecte une ouverture du système de contact de coupure mécanique (MK) en cas de chute de tension de 10 à 50 Volts pour un système de contact de coupure mécanique à coupure unipolaire ou de 20 à 100 Volts pour un système de contact de coupure mécanique à coupure bipolaire.

**15.** Procédé selon la revendication 14,
**caractérisé en ce que**

l'amplitude de la tension (DU) est comparée à une valeur seuil inférieure momentanée (SWU_low), la valeur seuil inférieure momentanée (SWU_low) étant formée à partir de la valeur absolue d'une valeur attendue momentanée de la tension (UE) multipliée par un facteur d'échelle, en particulier de 0,85 à 1, et soustraite d'une valeur de tension fixe, en particulier de 10 à 50 Volts pour un système de contact de coupure mécanique (MK) à coupure unipolaire ou de 20 à 100 Volts pour un système de contact de coupure mécanique (MK) à coupure bipolaire,
**en ce que**, lorsque la valeur seuil inférieure momentanée (SWU_low) est dépassée par le bas, une ouverture du système de contact de coupure mécanique (MK) est détectée.

**16.** Procédé selon la revendication 14 ou 15,
**caractérisé en ce que**

l'amplitude de la tension (DU) est comparée à une valeur seuil supérieure momentanée (SWU_high), la valeur seuil supérieure momentanée (SWU_high) étant formée à partir de la valeur absolue d'une valeur attendue momentanée de la tension (UE) divisée par un facteur d'échelle, en particulier de 0,85 à 1, et additionnée à une valeur de tension fixe, en particulier de 10 à 50 Volts pour un système de contact de coupure mécanique (MK) à coupure unipolaire ou de 20 à 100 Volts pour un système de contact de coupure mécanique (MK) à coupure bipolaire,
**en ce que**, en cas de dépassement de la valeur seuil supérieure momentanée (SWU_high), une ouverture du système de contact de coupure mécanique (MK) est détectée.

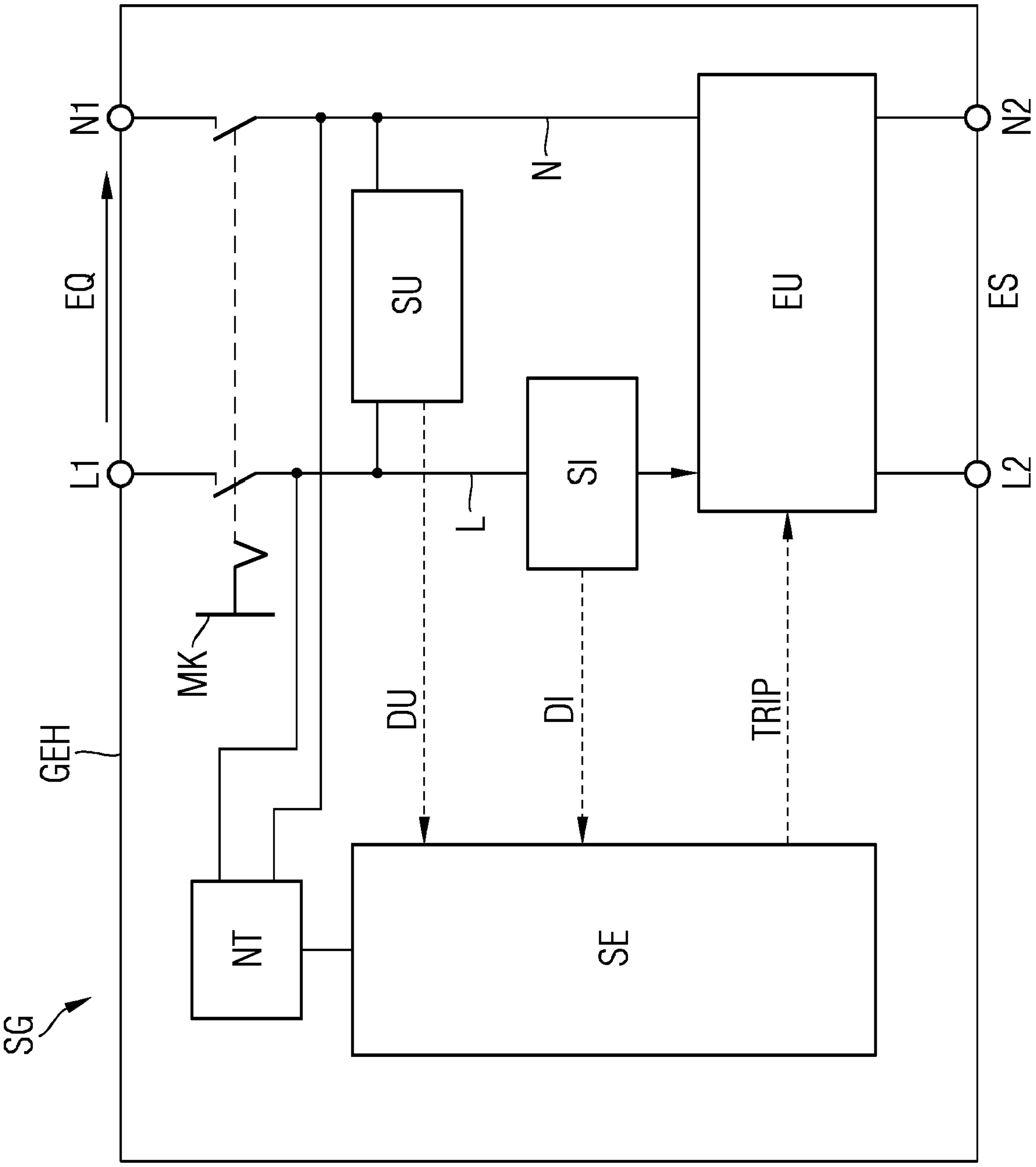


FIG 1

FIG 2

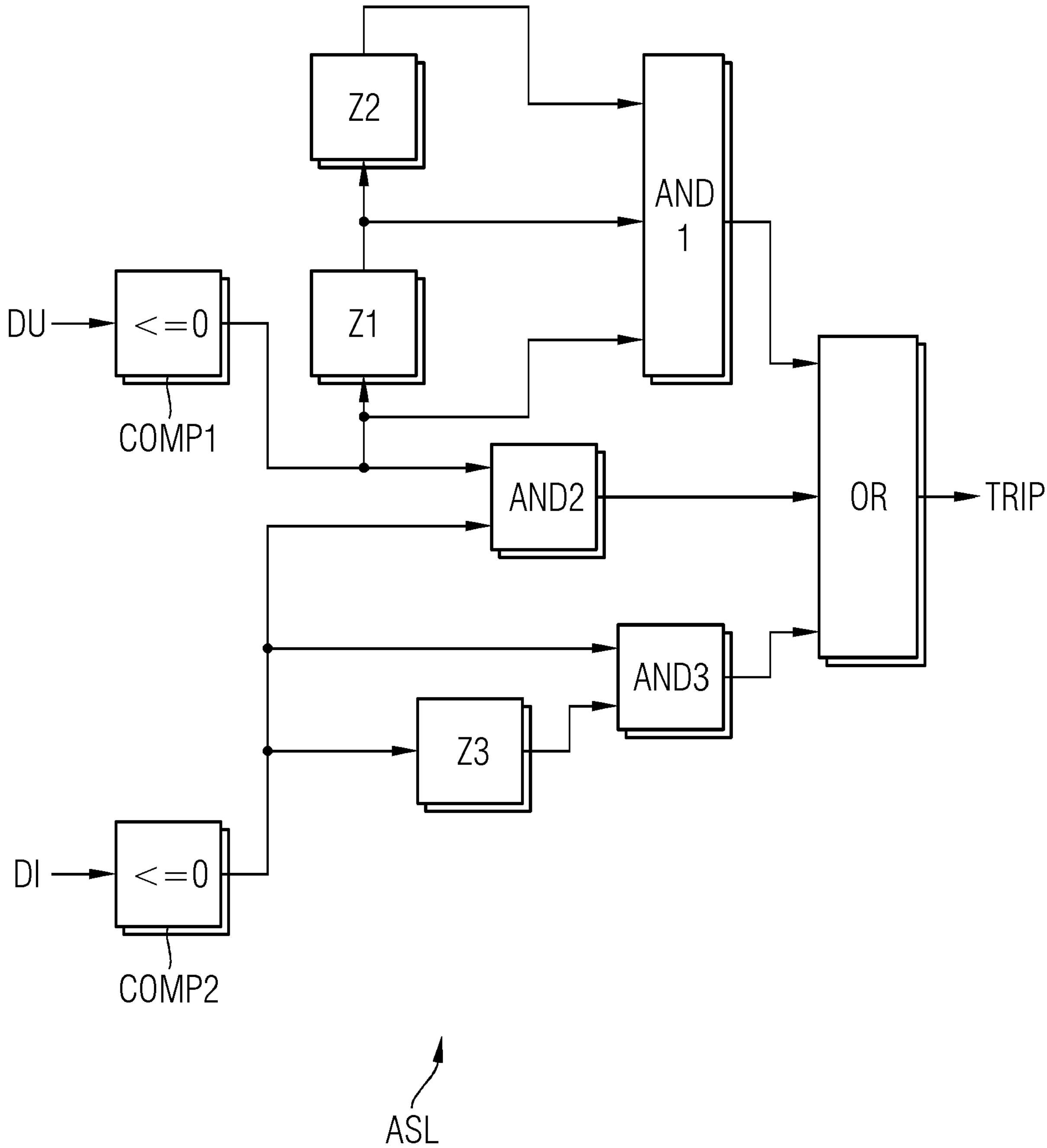

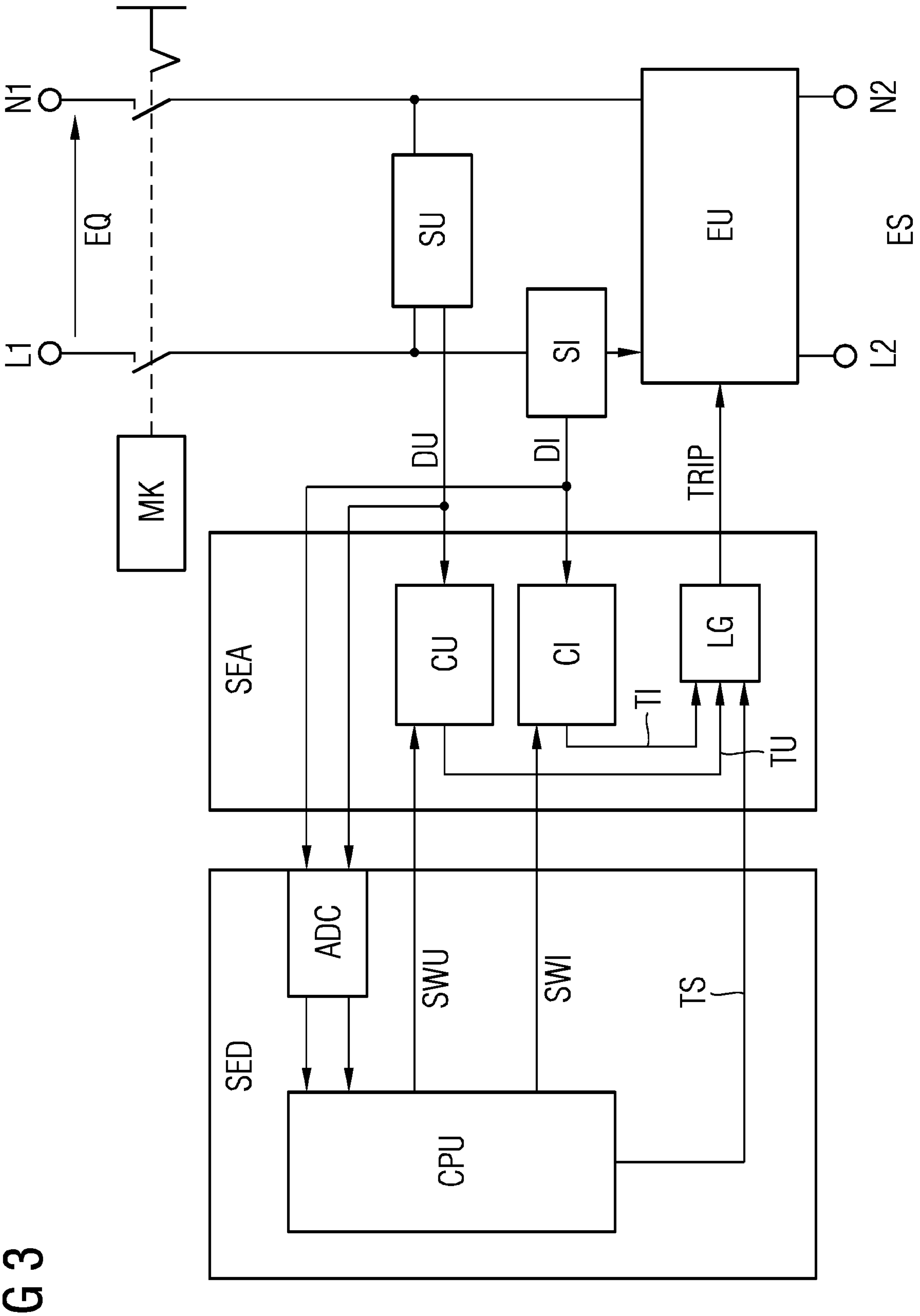
N1
L1
EQ
MK
SU
SI
EU
N2
L2
ES
DU
DI
TRIP
SEA
CU
CI
LG
TI
TU
SED
ADC
SWU
SWI
TS
CPU

FIG 3

FIG 4

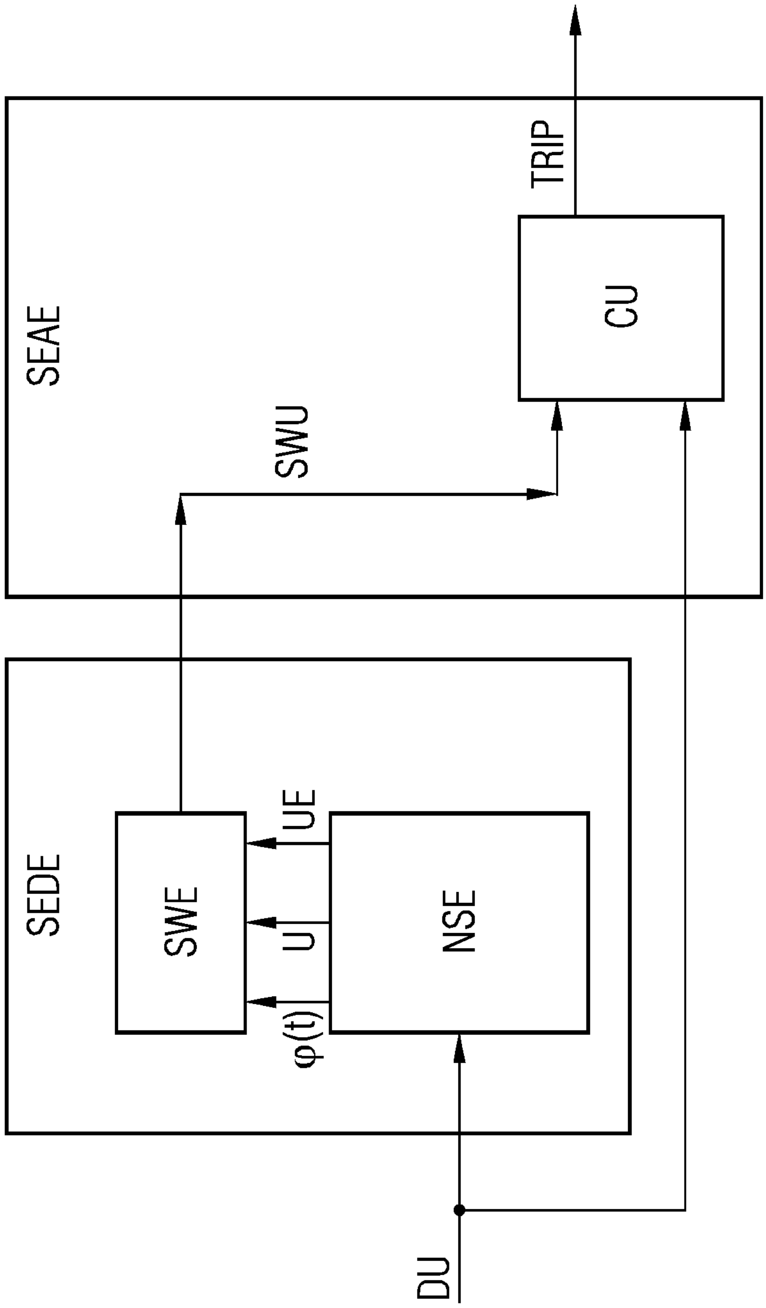

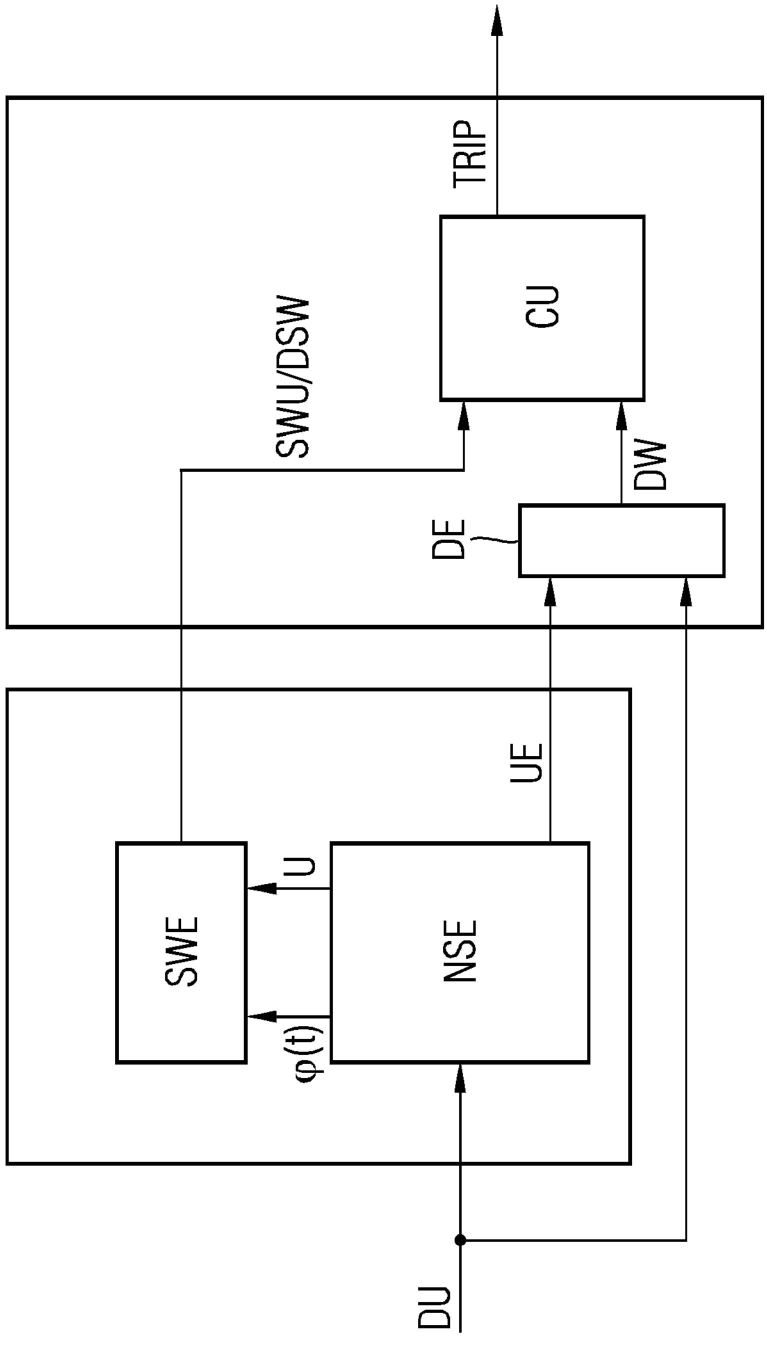


FIG 5

FIG 6

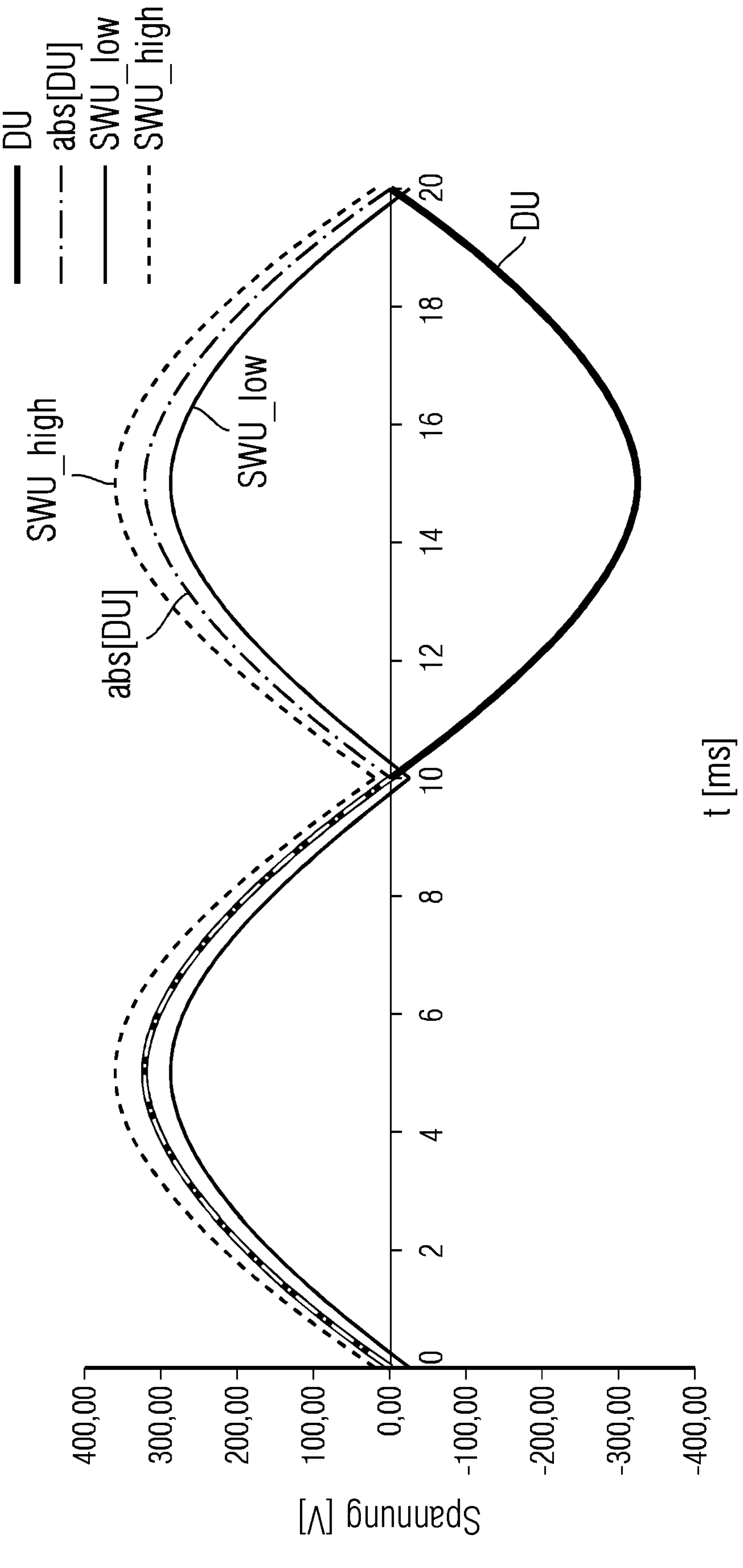
DU
abs[DU]
SWU_low
SWU_high
Spannung [V]
t [ms]
400,00
300,00
200,00
100,00
0,00
-100,00
-200,00
-300,00
-400,00
0
2
4
6
8
10
12
14
16
18
20

FIG 7

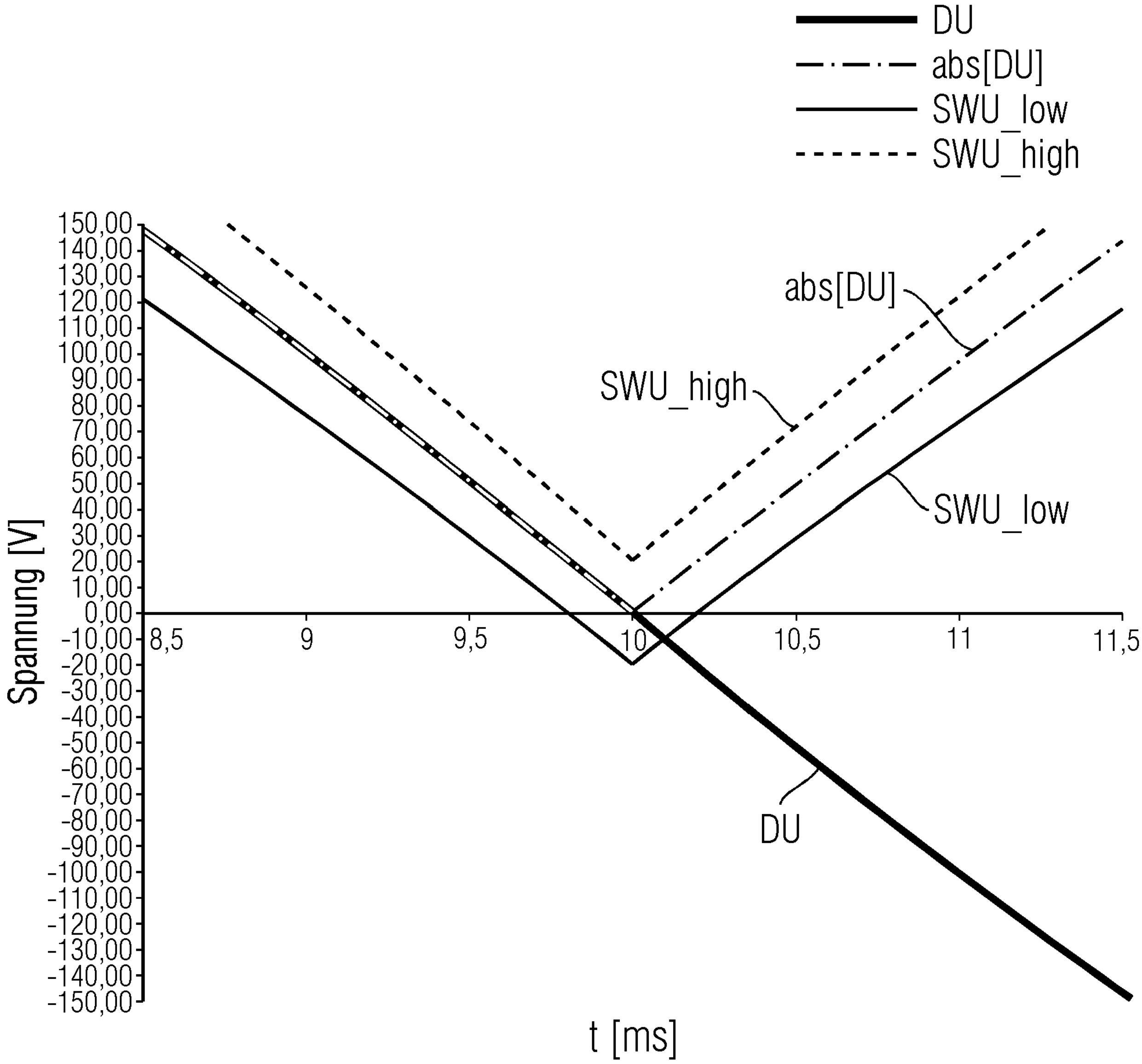
DU
abs[DU]
SWU_low
SWU_high
150,00
140,00
130,00
120,00
110,00
100,00
90,00
80,00
70,00
60,00
50,00
40,00
30,00
20,00
10,00
0,00
-10,00
-20,00
-30,00
-40,00
-50,00
-60,00
-70,00
-80,00
-90,00
-100,00
-110,00
-120,00
-130,00
-140,00
-150,00
Spannung [V]
8,5
9
9,5
10
10,5
11
11,5
t [ms]
abs[DU]
SWU_high
SWU_low
DU

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20200365346 A1